# EUROPEAN PATENT SPECIFICATION

(11) **EP 4 059 588 B1**
(45) Date of publication and mention of the grant of the patent: **01.01.2025**
(21) Application number: 20888646.5
(22) Date of filing: 31.07.2020
(51) Int. Cl.: B01D 53/86, B01D 53/90, B01D 53/94, B01F 25/433, F01N 3/08, F01N 3/24, F01N 3/20, F01N 3/28, F01N 13/08

(54) **FLOW RECTIFIER, HYDROLYSIS APPARATUS, AND DENITRIFICATION EQUIPMENT**
STRÖMUNGSGLEICHRICHTER, HYDROLYSEANLAGE UND DENITRIFIKATIONSANLAGE
REDRESSEUR D'ÉCOULEMENT, APPAREIL D'HYDROLYSE ET ÉQUIPEMENT DE DÉNITRIFICATION

(30) Priority: 12.11.2019 JP 2019204852
(43) Date of publication of application: 21.09.2022
(73) Proprietor: Kanadevia Corporation, Osaka-shi, Osaka 559-8559 (JP); Volcano Co., Ltd., Yodogawa-ku Osaka-shi Osaka 532-0034 (JP)
(72) Inventor: MORI, Takuma, Osaka-shi, Osaka 559-8559 (JP); SHONO, Emi, Osaka-shi, Osaka 559-8559 (JP); TANAKA, Hironaka, Osaka-shi, Osaka 559-8559 (JP); KOBAYASHI, Masaki, Osaka-shi, Osaka 532-0034 (JP); ONO, Kenji, Osaka-shi, Osaka 532-0034 (JP); YASUDA, Hirofumi, Osaka-shi, Osaka 532-0034 (JP); SATO, Kenji, Osaka-shi, Osaka 532-0034 (JP); MATSUMOTO, Kazuto, Osaka-shi, Osaka 532-0034 (JP)
(74) Representative: Grünecker Patent- und Rechtsanwälte PartG mbB
(86) International application number: PCT/JP2020/029388
(87) International publication number: WO 2021/095305

(56) References cited:
- WO-A1-2017/145235
- DE-T5- 112012 000 089
- JP-A- 2006 289 326
- JP-A- 2009 504 990
- JP-A- 2010 071 240
- JP-A- 2017 217 982
- JP-A- 2018 538 482
- JP-A- 2019 127 880
- US-A1- 2007 274 877
- US-A1- 2013 340 417
- US-A1- 2018 306 084
- US-B2- 7 090 810
- US-B2- 8 468 802
- US-B2- 9 604 170

## Description

### Technical Field

The present invention relates to a flow rectifier (flow straightening device), a hydrolysis apparatus (hydrolysis device), and denitrification equipment (NOx removal system).

### Background Art

There has been known a NOx removal system used in ships and the like to reduce a nitrogen oxide (NO_{X}) in an exhaust gas from an engine. Such a NOx removal system supplies, together with the exhaust gas, ammonia to a NOx removal catalyst, such as a selective catalytic reduction (SCR) catalyst, so as to cause a reduction reaction of a nitrogen oxide, thereby purifying the exhaust gas. Typically, in order to supply ammonia, a vessel for a hydrolysis reaction (hydrolysis reaction vessel; carburetor) carries out hydrolysis of urea water, which is easy to handle, in a high-temperature gas stream to generate ammonia. In order to supply the high-temperature gas stream to the hydrolysis reaction vessel, a hydrolysis device includes a burner unit. Further flow diverters for hydrolysis vessels are known from the following publications: DE 11 2012 000089 T5, US 9 604 170 B2, US 2007/274877 A1, US 2013/340417 A1, US 8 468 802 B2, US 7 090 810 B2 or US 2018/306084 A1.

### Citation List

### Patent Literatures

Patent Literature 1
Japanese Patent Application Publication Tokukai No. 2017-217982

### Summary of Invention

### Technical Problem

In the hydrolysis device to be applied to the NOx removal system, if a high-temperature gas stream obtained, in the hydrolysis reaction vessel, as a result of supply of an extraction gas from the engine and a gas from the burner unit has unevenness in flow rate and temperature, urea water sprayed thereto is hydrolyzed partially insufficiently. In view of this, the temperature and the flow rate of the gas stream supplied to the hydrolysis reaction vessel are preferably even.

In order to reduce the degree of unevenness in the gas stream, a study is typically made to design adequately long piping between the burner unit and the hydrolysis reaction vessel. However, adopting longer piping increases a heat loss in the piping, thereby reducing system efficiency. In addition, adopting the longer piping increases the size of the hydrolysis device, which is disadvantageous particularly in application to transportation equipment such as ships. Addition of a flow straightening part in the piping may be one idea. This, however, increases an exhaust resistance, thereby possibly causing deterioration in system efficiency.

An aspect of the present invention has an object to provide a flow straightening device which is for use in a hydrolysis device and with which a reduction in system efficiency in the hydrolysis device can be suppressed and/or the hydrolysis device can be downsized.

### Solution to Problem

In order to attain the object, a flow straightening device in accordance with an aspect of the present invention is a flow straightening device through which a gas stream passes before being introduced into a hydrolysis reaction vessel that causes a hydrolysis reaction of urea water, the flow straightening device including: an outer tube into which the gas stream flows through one end of the outer tube toward the other end of the outer tube which is opposite to the one end; a control wall positioned inside the outer tube or at the other end of the outer tube, the control wall reversing at least a portion of the gas stream flowing into the outer tube through the one end toward the other end; and at least one tube part which is at least partially positioned at a location that is inside the outer tube and that is between the one end and the control wall, the at least one tube part constituting a flow passage of the gas stream flowing from an inside of the outer tube toward an outside of the outer tube through a side wall of the outer tube so as to introduce the gas stream inside the outer tube into the hydrolysis reaction vessel, the at least one tube part having an inlet part and an outlet part for the gas stream.

### Advantageous Effects of Invention

With the above aspect of the present invention, it is possible to provide a flow straightening device which is for use in a hydrolysis device and with which a reduction in system efficiency in the hydrolysis device can be suppressed and/or the hydrolysis device can be downsized.

### Brief Description of Drawings

Fig. 1 is a view schematically illustrating a flow passage structure including a flow straightening device in accordance with Embodiment 1 of the present invention.
Fig. 2 is a view schematically illustrating a flow passage structure including a flow straightening device in accordance with Embodiment 2 of the present invention.
Fig. 3 is a view schematically illustrating a hydrolysis device to which a flow straightening device in accordance with Embodiment 3 of the present invention is applied.
Fig. 4 is a view schematically illustrating a structure of the flow straightening device in accordance with Embodiment 3 of the present invention.
Fig. 5 is a view schematically illustrating a structure of a flow straightening device in accordance with Variation 1 of the present invention.
Fig. 6 is a view schematically illustrating a structure of a flow straightening device in accordance with Variation 2 of the present invention.
Fig. 7 is a view schematically illustrating a structure of a flow straightening device in accordance with Variation 3 of the present invention.
Fig. 8 is a view schematically illustrating a flow straightening device in accordance with Configuration Example 1 of the present invention and a piping part to be attached to the flow straightening device.
Fig. 9 is a view schematically illustrating a flow straightening device in accordance with Configuration Example 2 of the present invention.
Fig. 10 is a view schematically illustrating a swirl device to be applied to a hydrolysis device in accordance with Configuration Example 3 of the present invention.
Fig. 11 is a view schematically illustrating a hydrolysis device to which a flow straightening device in accordance with Embodiment 4 of the present invention is applied.
Fig. 12 is a view schematically illustrating a structure of the flow straightening device in accordance with Embodiment 4 of the present invention.
Fig. 13 is a view schematically illustrating a structure of a flow straightening device in accordance with Variation 4 of the present invention.
Fig. 14 is a view schematically illustrating a structure of a flow straightening device in accordance with Variation 5 of the present invention.
Fig. 15 is a view schematically illustrating a structure of a flow straightening device in accordance with Variation 6 of the present invention.
Fig. 16 is a view schematically illustrating a structure of a flow straightening device in accordance with Variation 7 of the present invention.
Fig. 17 is a view schematically illustrating a NOx removal system in accordance with Embodiment 5 of the present invention.
Fig. 18 is a view schematically illustrating a NOx removal system in accordance with Embodiment 6 of the present invention.
Fig. 19 is a view schematically illustrating a NOx removal system in accordance with Embodiment 7 of the present invention.

### Description of Embodiments

### Embodiment 1

The following description will discuss, with reference to the drawings, an embodiment of the present invention. Shapes and sizes (e.g., lengths, widths, and heights) of configurations illustrated in the accompanying drawings do not always reflect shapes and sizes of the actual configurations, and may sometimes be changed appropriately for the purpose of clarification and simplification of the drawings.

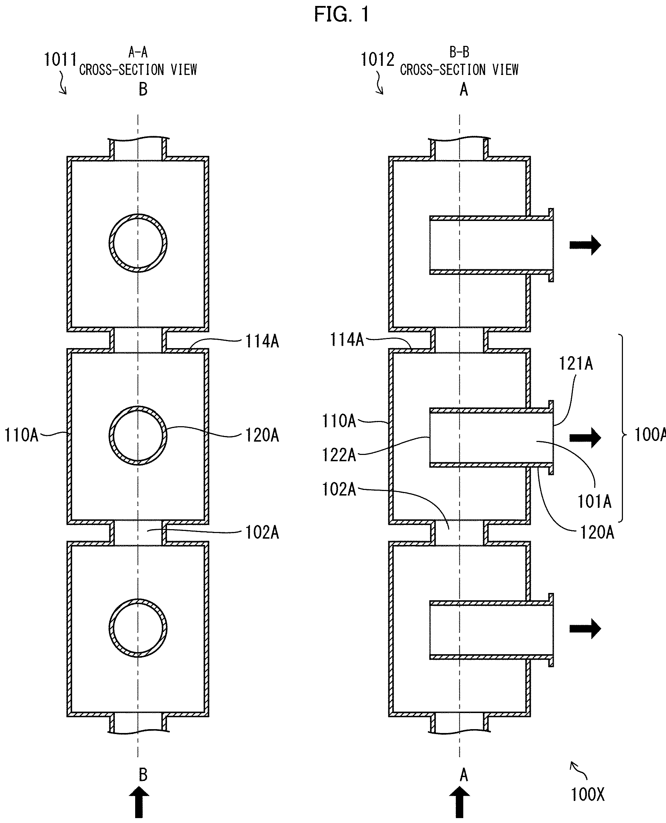

The description in Embodiment 1 will discuss a basic configuration of a flow straightening device in accordance with an aspect of the present invention. Fig. 1 is a view of a flow passage structure 100X including a flow straightening device 100A in accordance with Embodiment 1. Fig. 1 includes an A-A cross-section view 1011 of the flow straightening device 100A viewed in a front side and a B-B cross-section view 1012 of the flow straightening device 100A viewed in a left side. The positions in which the cross sections are taken are indicated in the cross-section views in Fig. 1.

The flow straightening device 100A includes an outer tube 110A and a tube part 120A. In Embodiment 1, the tube part 120A has a cylindrical shape. Alternatively, the tube part 120A may be a square tube or a tube of another shape. That is, the tube part 120A may have a radial cross section having a circular shape, an elliptical shape, a square shape, a rectangular shape, or any of other polygonal shapes.

The outer tube 110A receives, through one end thereof in its axial direction, a gas stream introduced thereinto. The outer tube 110A has an inlet opening part 102A therefor. The inlet opening part 102A constitutes an introduction port through which a gas is introduced into the flow straightening device 100A. The gas stream flowing through the inlet opening part 102A (the one end of the outer tube 110A) travels toward the other end of the outer tube 110A. That is, a direction in which the gas stream flows through the inlet opening part 102A (the one end of the outer tube 110A) so as to enter the flow straightening device 100A is in parallel with an axis of the outer tube 110A.

The inlet opening part 102A, which is provided at the one end of the outer tube 110A, has an inner diameter smaller than an inner diameter of the outer tube 110A. That is, the inlet opening part 102A has an area smaller than a radial cross-section area of the outer tube 110A. Thus, the outer tube 110A has a portion that is close to the inlet opening part 102A provided at the one end of the outer tube 110A and that constitutes a flow passage enlarging part in which a cross-section area of a flow passage of the gas stream flowing, through the inlet opening part 102A, from the one end of the outer tube 110A toward the other end of the outer tube 110A is enlarged.

The outer tube 110A has a side wall having a portion provided with an outlet opening part 101A. The tube part 120A penetrates through the side wall of the outer tube part 110A at the outlet opening part 101A. The tube part 120A has one end positioned inside the outer tube 110A and the other end positioned outside the outer tube 110A. Both the ends of the tube part 120A are opened, and the tube 120A itself constitutes a flow passage of the gas stream flowing from the inside of the outer tube 110A toward the outside of the outer tube 110A. That is, the one end of the tube part 120A is an inlet part 122A of the gas stream. Meanwhile, the other end of the tube 120A is an outlet part 121A of the gas stream.

The flow straightening device 100A is a device through which a gas stream passes before being introduced into a hydrolysis reaction vessel that causes a hydrolysis reaction of urea water. The tube part 120A supplies, into the hydrolysis reaction vessel, the gas stream coming from the inside of the outer tube 110A. For this, a portion of the tube part 120A which portion is close to the outlet part 121A is connected to the hydrolysis reaction vessel and is used there. The outlet part 121A may be provided with, as needed, a flange for use in connection and fixture of piping as illustrated in the drawings.

In a specific example shown in Embodiment 1 in Fig. 1, the tube part 120A, which constitutes the flow passage of a gas stream flowing from the inside of the outer tube 110A toward the outside of the outer tube 110A, has a radial cross-section area that is constant along an axial direction of the tube part 120A. The inlet opening part 102A is a minimum portion of the flow passage enlarging part of the outer tube 110A, in which a cross-section area of the flow passage is smaller than that of any other portion of the flow passage enlarging part of the outer tube 110A, and has an area equal to or greater than the radial cross-section area of the tube part 120A. However, there may be a case where the tube part 120A has a radial cross-section area that varies along the axial direction of the tube part 120A. In such a case, the area of the minimum portion of the flow passage enlarging part in which the cross-section area of the flow passage is smaller than that of any other portion only needs to be equal to or greater than a minimum value of the radial cross-section area of the tube part 120A.

As shown in Fig. 1, the flow passage structure 100X includes a plurality of flow straightening devices 100A in accordance with an aspect of the present invention being connected in series. One unit of a flow straightening device 100A has one end (inlet opening part 102A) through which a gas stream coming from the outside enters and the other end which is opposite to the one end. The other end of the one unit of the flow straightening device 100A corresponds to one end, through which a gas stream enters, of another flow straightening device 100A positioned downstream of the one unit of the flow straightening device 100A. That is, the other end of the flow straightening device 100A in accordance with Embodiment 1 is provided with a control wall 114a that reverses a portion of a gas stream flowing into the outer tube 110A through the one end (inlet opening part 102A) toward the other end.

After being introduced from the one end (inlet opening part 102A) of the outer tube 110A along the axial direction of the outer tube 110A, a gas stream is blocked by an outer peripheral surface of the tube part 120A and consequently makes a detour to avoid the tube part 120A. Then, the gas stream collides with the control wall 114A having an opening (an inlet opening part of a flow straightening device on a downstream side). When the gas stream partially collides with a non-opening portion of the control wall 114A, the gas stream is reversed and flows into the tube part 120A through the inlet part of the tube part 120A. Then, the gas stream introduced into the flow straightening device 100A is partially discharged from the outlet part of the tube part 120A. Drastically changing the flow direction of the gas stream inside the flow straightening device 100A in this manner facilitates agitation and mixing of the gas stream introduced into the flow straightening device 100A, thereby straightening the gas stream and achieving evenness in temperature.

### Embodiment 2

The following description will discuss another embodiment of the present invention. For convenience of description, a member having a function identical to that of a member discussed in the embodiments above is given an identical reference sign, and a description thereof is omitted.

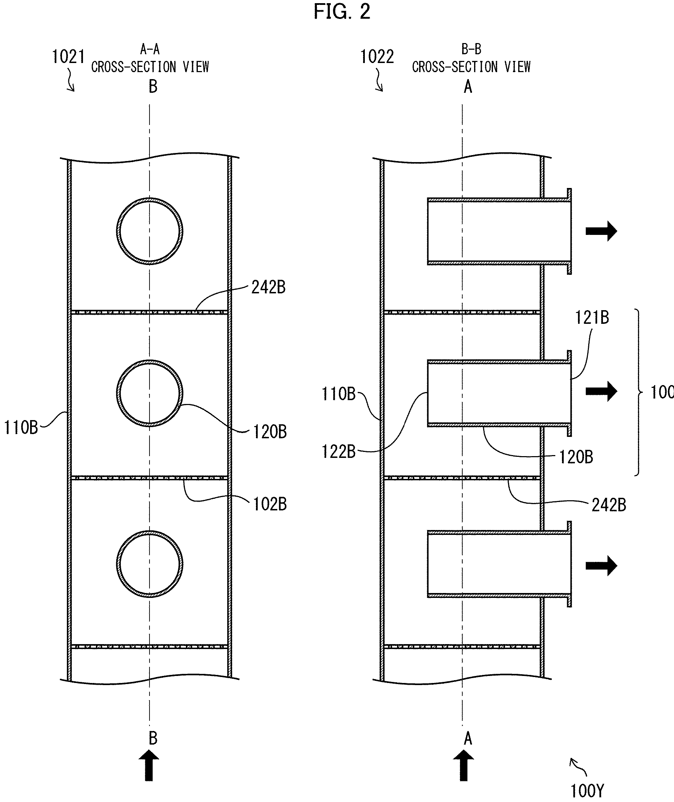

Fig. 2 is a view of a flow passage structure 100Y including a flow straightening device 100B in accordance with Embodiment 2. Fig. 2 includes an A-A cross-section view 1021 of the flow straightening device 100B viewed in a front side and a B-B cross-section view 1022 of the flow straightening device 100B viewed in a left side. The positions in which the cross sections are taken are indicated in the cross-section views in Fig. 2.

The flow straightening device 100B in accordance with Embodiment 2 has a distribution plate 242B at a boundary between the flow straightening device 100B and a unit flow straightening device upstream or downstream of the flow straightening device 100B. On this point, the flow straightening device 100B in accordance with Embodiment 2 differs from Embodiment 1. The distribution plate 242B is made of a so-called punching board having multiple holes. The distribution plate 242 adjusts a gas-stream flow rate ratio between unit flow straightening devices.

One end of an outer tube 110B is provided with a distribution plate 242B constituting a flow passage enlarging part in which a cross-section area of a flow passage of the gas stream flowing, through the one end, into the outer tube 110B toward the other end of the outer tube 110B is enlarged. The multiple holes of the distribution plate 242B constitute an inlet opening part 102B. The other end of the outer tube 110B is provided with a distribution plate 242B functioning as a control wall that reverses at least a portion of the gas stream flowing into the outer tube 110B through the one end toward the other end. Embodiment 2 also brings about similar effects given by Embodiment 1.

### Embodiment 3

The following description will discuss more specific configurations of embodiments of the present invention.

### <Configuration of hydrolysis device>

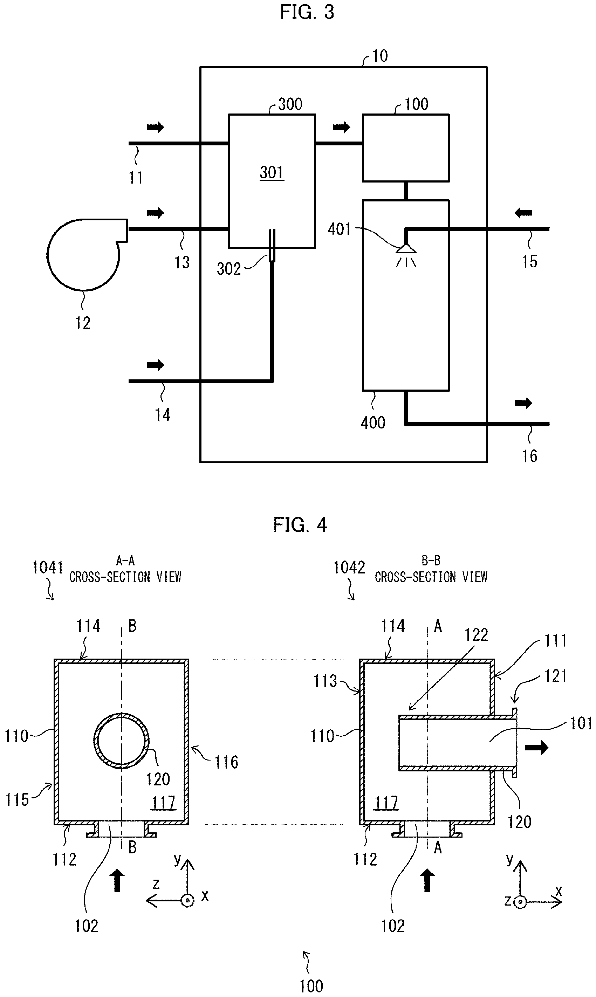

Fig. 3 is a view schematically illustrating a hydrolysis device 10 including a flow straightening device 100 in accordance with Embodiment 3. The hydrolysis device 10 in accordance with Embodiment 3 is a device that supplies a gas containing ammonia to a NOx removal catalyst. The hydrolysis device 10 includes, in addition to a flow straightening device 100, a burner unit 300 and a hydrolysis reaction vessel 400.

The burner unit 300 is a device that supplies, to the hydrolysis reaction vessel 400, a high-temperature gas that is required to cause a hydrolysis reaction of urea water. The flow straightening device 100 is connected to the burner unit 300 and the hydrolysis reaction vessel 400 at a location between the burner unit 300 and the hydrolysis reaction vessel 400. Preferably, the flow straightening device 100 is positioned at a location very close to the hydrolysis reaction vessel 400.

The burner unit 300 includes a combustion chamber 301 and a burner 302. The burner 302 is connected to a fuel line 14. A fuel to be supplied to the burner 302 via the fuel line 14 can be any of Bunker A heavy oil, Bunker B heavy oil, Bunker C heavy oil, light oil, a gas fuel made of a hydrocarbon gas, and other fuels.

External air from a blower 12 is introduced into the combustion chamber 301 through an external air line 13, and a fuel is burnt in the combustion chamber 301. In a specific example, the combustion chamber 301 has a tubular shape elongated in its axial direction, more preferably a cylindrical shape, and has a bottom provided with the burner 302. In addition, an extraction gas from the exhaust gas from an engine such as a diesel engine is introduced into the combustion chamber 301 via a gas extraction line 11, and a combustion gas discharged from the burner unit 300 and the extraction gas from the exhaust gas from the engine are mixed in the combustion chamber 301. Then, a resultant mixture gas passes through the flow straightening device 100, and consequently the gas stream is straightened and the degree of unevenness is temperature is improved.

While the hydrolysis device 10 is in operation, adjustment is carried out so that the extraction gas is greater in proportion than the combustion gas. The burner unit 300 refers to the flow rate and temperature of the gas to be supplied to the hydrolysis reaction vessel 400 to regulate the combustion appropriately.

The hydrolysis reaction vessel 400 is a device that hydrolyzes urea water in its inside to generate ammonia. The hydrolysis reaction vessel 400 is provided with a nozzle 401. The nozzle 401 is supplied with the urea water via a supply line 15. The nozzle 401 sprays the urea water to a high-temperature gas introduced into the hydrolysis reaction vessel 400. Then, the urea water thus sprayed is hydrolyzed at a high temperature, and consequently ammonia is generated.

In a specific example, the hydrolysis reaction vessel 400 has a tubular shape elongated in its axial direction or a polygonal tubular shape whose radial cross-section shape is a square. However, the shape of the hydrolysis reaction vessel 400 is not limited to the polygonal tube. Alternatively, the hydrolysis reaction vessel 400 may have a cylindrical shape. The hydrolysis reaction vessel 400 may include, in its inside, a hydrolysis catalyst that further facilitates the hydrolysis reaction. The hydrolysis reaction vessel 400 supplies, through a processed gas line 16, a high-temperature processed gas mixed with ammonia.

### <Configuration of flow straightening device>

Fig. 4 is a view schematically illustrating a structure of the flow straightening device 100 in accordance with Embodiment 3. Fig. 4 includes an A-A cross-section view 1041 of the flow straightening device 100 viewed in a front side and a B-B cross-section view 1042 of the flow straightening device 100 viewed in a left side. The positions in which the cross sections are taken are indicated in the cross-section views in Fig. 4.

The flow straightening device 100 includes a housing 110 and a tube part 120. In a specific example shown in Embodiment 3, the housing 110 has a rectangular parallelepiped shape. The housing 110 is hollow in its inside, and has an internal space 117 surrounded by the housing 110. The housing 110, which has the rectangular parallelepiped shape, has one side surface (a side surface on the front side) constituting a first side surface 111, which is a side surface close to an outlet.

One side surface intersecting the first side surface 111 at right angles constitutes a second side surface 112, which is a side surface close to an inlet of a gas stream. A side surface opposed to the first side surface 111 is a third side surface 113. A side surface opposed to the second side surface 112 is a fourth side surface 114. The other two side surfaces are a fifth side surface 115 (left side surface) and a sixth side surface 116 (right side surface). The fifth side surface 115 is opposed to the sixth side surface 116.

For convenience of explanation, x-y-z coordinate systems for the housing 110 having the rectangular parallelepiped shape are defined as follows. Assuming that the first side surface 111 and the third side surface 113 are orthogonal to an x-axis, a direction extending from the inside of the housing 110 toward the outside of the housing 110 over the first side surface 111 is referred to as an x-axis positive direction. Assuming that the second side surface 112 and the fourth side surface 114 are planes orthogonal to a y-axis, a direction extending from the outside of the housing 110 toward the inside of the housing 110 over the second side surface 112 is referred to as a y-axis positive direction. Assuming that the fifth side surface 115 and the sixth side surface 116 are planes orthogonal to a z-axis, the fifth side surface 115 is positioned advanced in a z-axis positive direction more than the sixth side surface 116. In each of the A-A cross-section view 1041 and the B-B cross-section view 1042, the x-y-z coordinate systems are indicated.

The second side surface 112 has a portion that is at or close to a center of the second side surface 112 and that is provided with an inlet opening part 102. In the specific example shown in Embodiment 3, the inlet opening part 102 has a circular shape. This is because that piping (duct) connected to the flow straightening device 100 typically has a circular cross-sectional shape. The inlet opening part 102 constitutes an introduction port through which a gas is introduced into the flow straightening device 100. With this, while the flow straightening device 100 is in use, the gas stream is introduced into the flow straightening device 100 through the inlet opening part 102 from the outside of the flow straightening device 100 so that the gas stream flows in a y-direction. In the specific example shown in Embodiment 3, a second direction, which is a direction of the gas stream introduced from the inlet opening part 102, is the y-direction.

The first side surface 111, the fifth side surface 115, the third side surface 113, and the sixth side surface 116 of the housing 110 constitute an outer tube. That is, these side surfaces are side walls of the outer tube. An axial direction of the outer tube is in parallel with the y-direction. The second side surface 112, in which the inlet opening part 102 is provided, is at one end of the outer tube. The second side surface 112, in which the inlet opening part 102 is provided, constitutes a flow passage enlarging part.

The fourth side surface 114, which is opposed to the second side surface 112, is at the other end of the outer tube, and constitutes a control wall that reverses the gas stream flowing into the outer tube through the one end toward the other end. In Embodiment 3, the fourth side surface 114, which is the control wall, is a wall surface without an opening, and closes the other end of the outer tube.

The first side surface 111 has a portion that is at or close to a center of the first side surface 111 and that is provided with an outlet opening part 101. The tube part 120 penetrates through the first side surface 111 at the outlet opening part 101. The tube part 120 is opened in its both ends, and has a straight tubular shape extending in its axial direction. In the specific example shown in Embodiment 3, the outlet opening part 110 has a circular shape, and the tube part 120 has a cylindrical shape. In the specific example shown in Embodiment 3, the tube part 120 has an inner diameter and an outer diameter that are substantially constant in the axial direction of the tube part 120.

A second end 121 of the tube part 120, which penetrates through the first side surface 111, is one end in its axial direction, and is positioned outside the housing 110. A first end 122 of the tube part 120 is the other end in its axial direction, and is positioned in the internal space 117 of the housing 110. That is, the tube part 120 is set to the housing 110 so as to extend in a first direction from the first end 122 toward the first side surface 111.

In the specific example shown in Embodiment 3, the axial direction (first direction) of the tube part 120 is orthogonal to the first side surface 111 (i.e., in parallel with the x-axis). The second end 121 and the first end 122 of the tube part 120 are on a plane being in parallel with the first side surface 111 (i.e., a plane being in parallel with a y-z plane).

In Embodiment 3, the second end 121 of the tube part 120 constitutes an outlet through which the gas stream is discharged to the outside of the flow straightening device 100. With this, while the flow straightening device 100 is in use, the gas stream flows in an x-direction from the inside of the flow straightening device 100 toward the outside of the flow straightening device 100. That is, the tube part 120 constitutes a flow passage of the gas stream flowing in the first direction from the internal space 117 of the housing 110 so as to be discharged to the outside. The second end 121 of the tube part 120 is an outlet part of the tube part 120, and the first end 122 is an inlet part. In this case, the gas stream is discharged to the outside through the outlet opening part 101 provided in the first side surface 111.

The tube part 120, which constitutes the outlet-side flow passage of the gas stream, penetrates through the first side surface 111 so as to protrude into the internal space 117. An outer surface of the tube part 120 is positioned so as to block the gas stream being introduced from the inlet opening part 102 in the second direction. The tube part 120 is partially disposed in a space virtually extended from the inlet opening part 102 in the second direction (y-direction) (i.e., in a trajectory along which the inlet opening part 102 is virtually moved in the second direction).

Particularly, in Embodiment 3, the inlet opening part 102, which constitutes the introduction port, is set in the housing 110 such that a center axis of the inlet opening part 102 intersects the tube part 120. Thus, the gas stream introduced from the inlet opening part 102 in the second direction includes a center part, and collides with the outer surface of the tube part 120.

Note that, as shown in Fig. 4, each of the inlet opening part 102, which constitutes the introduction port, and the second end 121 of the tube part 120, which constitutes the outlet of the gas stream, may be provided with a flange for connection and fixing to the piping, as appropriate. Each of the housing 110 and the tube part 120 of the flow straightening device 100 may be made of a stainless steel, but may alternatively be made of another material, particularly another metal.

In an example, the size of the housing 110 of the flow straightening device 100 may be defined as follows. Each of the first side surface and the second side surface is constituted by sides each being within a range of 0.5 m to 2 m. A ratio of an area of the inlet opening part 102 with respect to an area of the second side surface 112 is preferably approximately 1% to approximately 50%. A ratio of a cross-section area of a portion of the tube part 120 which portion is at or close to the first end 122 with respect to an area of the first side surface is preferably approximately 1% to approximately 50%. However, the sizes of the parts of the flow straightening device 100 may be designed as appropriate depending on the flow rate of a gas stream to be applied.

### <Operation of flow straightening device>

While the hydrolysis device 10 is in operation, the flow straightening device 100 functions as follows. A combustion gas from the burner unit 300 and an extraction gas from an exhaust gas from the engine are mixed in the combustion chamber 301, so as to yield a gas stream (a gas stream of an extraction gas heated by the burner unit 300). The gas stream passes through the flow straightening device 100 so as to be supplied to the hydrolysis reaction vessel 400. The gas stream being introduced into the flow straightening device 100 through the inlet opening part 102 and flowing mainly in the second direction, i.e., the y-direction, collides with the outer surface of the tube part 120 extending in the x-axis direction, which is the first direction, and makes a detour to flow toward a part behind the tube part 120.

Due to the fourth side surface 114, which is a portion of the housing 110 opposed to the inlet opening part 10, the gas stream cannot advance farther in the y-direction, and consequently the direction of the gas stream is changed. That is, the fourth side surface 114 changes the direction of the gas stream introduced from the inlet opening part 102 in the second direction, and accordingly reverses at least a portion of the gas stream.

In Embodiment 3, the fourth side surface 114 constitutes the control wall that controls, in this manner, the direction of the gas stream having been introduced from the inlet opening part 102 in the second direction. Thus, in this case, the control wall is disposed at a location where the control wall faces the internal space 117. The entire gas stream changes its flowing direction to an x-axis negative direction, so as to reach the first end 122 of the tube part 120.

The gas stream further changes its flowing direction to the x-axis positive direction, so as to enter the tube part 120 through the first end 122. The gas stream is then guided by the tube part 120, so as to be discharged from the outlet (the second end 121 of the tube part 120). In this manner, the direction of the gas stream is drastically changed in the flow straightening device 100. This facilitates agitation and mixing of the gas stream. In addition, the tube part 120 is disposed so as to allow the gas stream to collide with the tube part 120 at a location close to the inlet opening part 102. With this, a portion of the gas stream making a detour to avoid the tube part 120 may generate a swirl at a location behind the tube part 120. The swirl generated in this manner also facilitates agitation and mixing of the gas stream.

Consequently, the degree of unevenness in temperature of the supplied gas stream is reduced. In addition, even in a case where the gas stream introduced from the inlet opening part 102 is a drift, the drift is corrected to rectify unevenness in the flow rate, and is then discharged out of the flow straightening device 100. The gas stream is preferably introduced into the hydrolysis reaction vessel 400 immediately after passing through the flow straightening device 100. In such a case, thanks to the small degrees of unevenness in temperature and flow rate of the gas stream, a hydrolysis reaction of urea water inside the hydrolysis reaction vessel 400 proceeds reliably.

The inlet opening part 102, which is the introduction port of the flow straightening device 100, is provided in a portion of the second side surface 112. Thus, a cross-section area of the gas stream introduced into the flow straightening device 100 is substantially enlarged at the time when the gas stream is introduced into the flow straightening device 100. A cross-section area of the gas stream introduced perpendicularly to the second side surface 112, which is in the second direction, is equal to an area of the inlet opening part 102 at the time when the gas stream passes through the inlet opening part 102. Then, at the time when the gas stream is introduced into the housing 110, a flow passage of the gas stream is defined by the side surfaces of the housing, specifically, by the first side surface 111, the third side surface 113, and two side surfaces intersecting the first side surface 111 and the second side surface 112. Thus, a cross-section area of the flow passage of the gas stream is enlarged so as to be substantially equal to the area of the second side surface 112.

In addition, at the time when the gas stream is discharged from the flow straightening device 100, the gas stream is narrowed by a flow passage defined by a cross-section area of a portion of the tube part 120 which portion is at or close to the first end 122 (i.e., the area of the gas stream is reduced so as to be smaller than the area of the first side surface 111). As described above, the cross-section area of the gas stream inside the flow straightening device 100 is substantially enlarged. Therefore, even when agitation and mixing of the gas stream is facilitated, the flow straightening device 100 would not generate a large exhaust resistance.

Generally, mixing of the gas stream in the piping can be facilitated by employing adequately long piping between devices. However, applying such a technique to the hydrolysis device may cause a heat loss, thereby leading to a reduction in system efficiency of the hydrolysis device. Further, employing the long piping may make it difficult to downsize the hydrolysis device. From the viewpoint of application of the hydrolysis device to transportation equipment such as ships, the downsizing is an important item.

Meanwhile, the flow straightening device 100 in accordance with Embodiment 3 has a compact box-shape as a whole, and can be installed at a location upstream of and very close to the hydrolysis reaction vessel 400. A heat loss in the flow straightening device 100 is small. In addition, in the effort for reducing the degree of unevenness by modifying the piping, various factors such as the length and/or routing (turn) of the piping may affect the degree of unevenness in the gas stream. Thus, it is necessary to deal with different tasks in different application cases. Meanwhile, in a case where the flow straightening device 100 is applied, such a problem would not occur.

Providing a known flow straightening member in the piping can be considered as one way to improve the degree of unevenness in the gas stream. Generally, however, this may lead to an increase in exhaust resistance, thereby deteriorating the system efficiency of the hydrolysis device. Meanwhile, the flow straightening device 100 would not cause a large exhaust resistance.

As described above, the hydrolysis device 10 to which the flow straightening device 100 is applied enables: a reduction of an inadequate hydrolysis reaction thanks to improvement in the degree of unevenness of the gas stream; a reduction in energy loss in the hydrolysis device (i.e., a reduction in exhaust resistance, a reduction in heat loss); and downsizing of the hydrolysis device 10.

In the flow straightening device 100 in accordance with Embodiment 3, the housing 110 has the rectangular parallelepiped shape. The housing having the rectangular parallelepiped shape is favorable in the following points. Specifically, the housing having the rectangular parallelepiped shape can be manufactured easily. In addition, the housing having the rectangular parallelepiped shape may have arrangement in which the introduction port and the outlet for the gas stream are disposed so as to be orthogonal to each other and thus can effectively reduce the degree of unevenness in the gas stream. However, application of the present invention is not limited to cases where the housing has the rectangular parallelepiped shape. Alternatively, the present invention is applicable to cases in which the housing is a solid body having a side surface being in a parallelogram shape or a trapezoid shape. Further alternatively, the housing may be a solid body having, e.g., a spherical shape, an oval shape, a cylindrical shape, or a barrel-shape.

In the example of the flow straightening device 100 in accordance with Embodiment 3, the first direction which is a direction of the flow passage of the gas stream flowing to the outside from the internal space 117 of the housing 110 is perpendicular (at 90°) to the second direction which is a direction of the gas stream flowing toward the internal space 117 of the housing 110 from the outside through the inlet opening part 102. However, the present invention is not limited to the configuration in which the first direction and the second direction are strictly perpendicular to each other. Alternatively, the first direction and the second direction may be substantially perpendicular to each other, specifically, at an angle of approximately 80° to approximately 100°. This does not affect the effects given by the above configuration.

The present invention is not limited to these examples. The present invention may encompass other configurations, provided that the first direction and the second direction are different directions and a direction of a gas stream in the housing 110 can be changed as described above so that a drift is straightened.

### <Others>

As described above, in the specific example of Embodiment 3, the combustion chamber 301 of the burner unit 300 has the tubular shape elongated in its axial direction. The hydrolysis reaction vessel 400 has the tubular shape elongated in its axial direction. In view of this, in order to achieve a compact hydrolysis device 10, the combustion chamber 301 of the burner unit 300 and the hydrolysis reaction vessel 400 are preferably arranged so that their axial directions are in parallel with each other.

However, arrangement of the devices in the hydrolysis device 10 is not limited to this. Particularly in a case where there is a limitation on a space, such as a case where the hydrolysis device is installed in transportation equipment such as a ship, it is necessary to design the arrangement of the devices in accordance with the shape of the space of the installation site. Note that an orientation of the hydrolysis reaction vessel 400 to be installed may be an orientation with which a gas stream flows in a vertical direction inside the hydrolysis reaction vessel 400 (vertical installation), an orientation with which a gas stream flows in a horizontal direction inside hydrolysis reaction vessel 400 (horizontal installation), or any of other orientations.

### Variation 1

The following description will discuss another embodiment of the present invention. For convenience of description, a member having a function identical to that of a member discussed in the embodiments above is given an identical reference sign, and a description thereof is omitted.

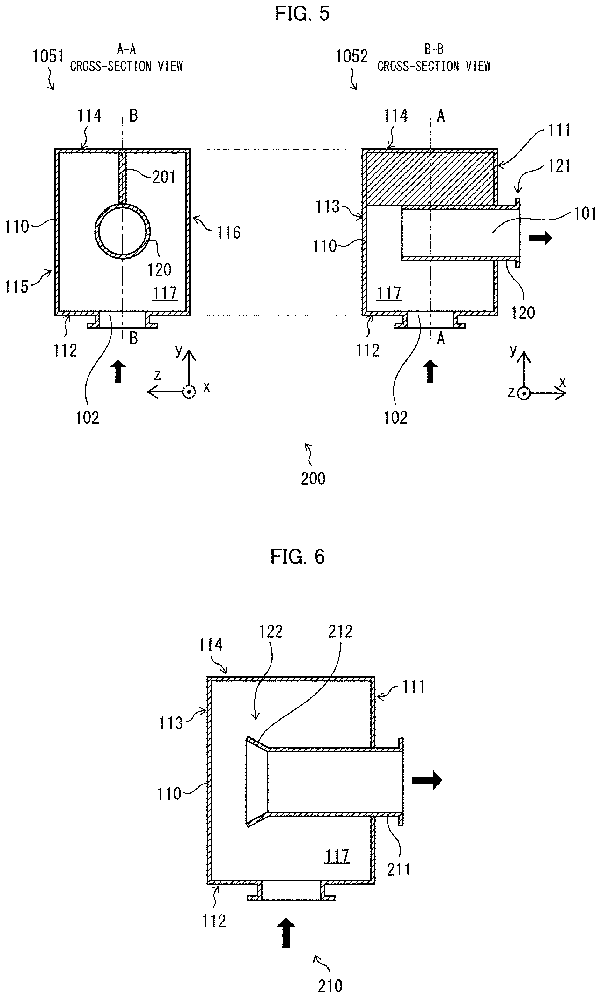

Variation 1 is a variation of Embodiment 3, and is similar to Embodiment 3 except for a configuration of a flow straightening device. Fig. 5 is a view schematically illustrating a structure of a flow straightening device 200 in accordance with Variation 1. Fig. 5 includes an A-A cross-section view 1051 of the flow straightening device 200 viewed in a front side (in an x-axis negative direction) and a B-B cross-section view 1052 of the flow straightening device 200 viewed in a left side (in a z-axis negative direction).

In the flow straightening device 200, a separation plate 201 having a planar shape is disposed in an internal space 117 of a housing 110 so as to extend, along a direction in which a tube part 120 extends (i.e., a direction perpendicular to a first side surface; an x-axis direction), between a fourth side surface 114 and the tube part 120. The separation plate 201 is perpendicular to the first side surface 111 and to a second side surface 112 (i.e., in parallel with an x-y plane).

As described above, the separation plate 201 is disposed at a location that is inside the outer tube and that is between the tube part 120 and the control wall (fourth side surface 114), and has a planar shape extending in a longitudinal direction (x-axis direction) of the tube part 120 and in a direction (y-axis direction) extending from one end of the outer tube toward the other end of the outer tube. The separation plate 201 is disposed behind a portion of the outer surface of the tube part 120 which portion collides with a gas stream introduced into the flow straightening device 200 from the outside of the flow straightening device 200 through the inlet opening part 102.

The separation plate 201 prevents a phenomenon that a gas stream introduced into the flow straightening device 200 flows around the tube part 120 plural times, which phenomenon may occur if the gas stream partially includes an extreme drift. In this manner, the separation plate 201 improves the degree of unevenness in the flow quantity in both sides partitioned by the separation plate 201. Note that the separation plate 201 may be a planar plate that closes a space between the tube part 120 and the fourth side surface 114 without any gap, but may alternatively be disposed between the tube part 120 and the fourth side surface 114 with a gap therebetween, as appropriate, within the scope of the purpose of controlling the gas stream.

### Variation 2

Variation 2 is a variation of Embodiment 3, and is similar to Embodiment 3 except for a shape of a tube part of a flow straightening device. Fig. 6 is a view schematically illustrating a structure of a flow straightening device 210 in accordance with Variation 2, and corresponds to the B-B cross-section view 1042 shown in Fig. 4.

In the flow straightening device 210, a tube part 211 has a portion which is close to a first end 122 and which has a diameter enlarged with increasing proximity to the first end 122. A tapered part 212 designed as above allows a gas stream to more smoothly flow from an internal space 117 into the tube part 211. Consequently, the gas stream can flow along an inner wall of the tube part 211 more smoothly. This can reduce a pressure resistance of the flow, thereby further reducing the degree of unevenness in the flow rate inside the tube part 211. Thus, by adopting a tapered shape such as that of the tube part 211, it is possible to further improve the degree of unevenness in the flow rate of the gas stream supplied to the hydrolysis reaction vessel.

### Variation 3

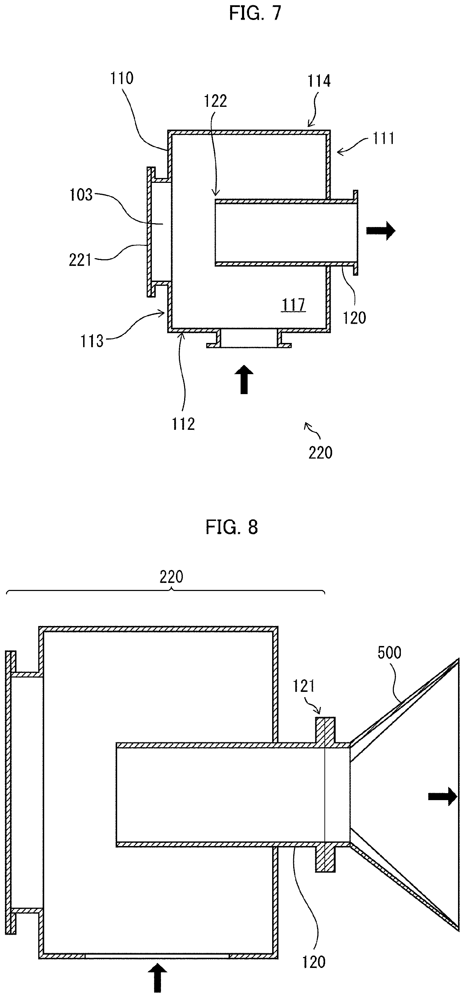

Variation 3 is a variation of Embodiment 3, and is similar to Embodiment 3 except for a configuration of a flow straightening device. Fig. 7 is a view schematically illustrating a structure of a flow straightening device 220 in accordance with Variation 3, and corresponds to the B-B cross-section view 1042 shown in Fig. 4.

The flow straightening device 220 has a housing 110 including a third side surface 113 having a maintenance opening part 103 (manhole) that is opened. The third side surface 113 of the housing 110 is a side surface of an outer tube and is opposed to a first end 122 (inlet part) of a tube part 120. The maintenance opening part 103 is closed by a closing plate 221 in a normal state. The closing plate 221 is detachably fixed to the housing 110, and is configured to be detachable so that a worker can access an internal space 117 during maintenance.

The closing plate 221 can be fixed to the housing 110 by fixing a bolt and a nut to a flange provided in the housing 110. Alternatively, the closing plate 221 may be fixed to the housing 110 by other method(s). For example, the fixing may be carried out via a bolt and a screw hole provided in the third side surface 113 or via a fixing lever provided in the third side surface 113. By employing the maintenance opening part 103 and the closing plate 211 configured as above, it is possible to provide a flow straightening device that allows easy access to the internal space 117 during maintenance.

### Configuration Example 1

The description in Configuration Example 1 will discuss further details of an aspect of connection between a flow straightening device and a hydrolysis reaction vessel in a hydrolysis device in accordance with an aspect of the present invention. Fig. 8 is a view schematically illustrating a state in which a piping part 500 for connection with a hydrolysis reaction vessel is attached to a flow straightening device 220. The piping part 500 has one end connected to a second end 121, which is an outlet of a gas stream, of a tube part 120. In Fig. 8, fixing of the piping part 500 is carried out via a flange provided at the second end 121.

The piping part 500 has the other end connected to an inlet side of the hydrolysis reaction vessel 400 having a tubular shape. In Configuration Example 1, the piping part 500 has a portion which is close to the inlet side of the hydrolysis reaction vessel 400 and which has a cross-section area greater than a cross-section area of an outlet (a second end 121 of the tube part 120) of the flow straightening device 220, and accordingly has a shape gradually expanded along a traveling direction of a gas stream (i.e., an x-axis direction). By employing the piping part 500 having a cross-sectional shape that gradually changes with increasing proximity to the inlet of the hydrolysis reaction vessel 400 from the outlet (the second end 121 of the tube part 120) of the flow straightening device 220, it is possible to reduce the degree of unevenness in flow rate of a gas stream to be supplied to the hydrolysis reaction vessel 400, thereby exerting the effect of achieving uniformity.

### Configuration Example 2

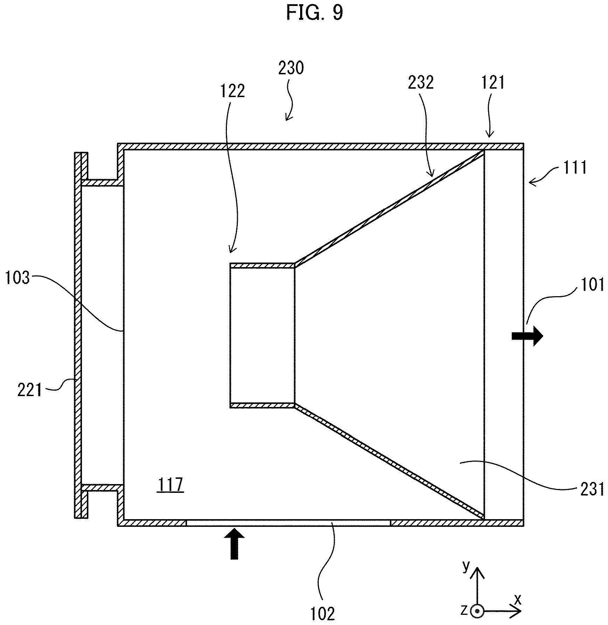

Configuration Example 2 indicates another aspect of connection between a flow straightening device and a hydrolysis reaction vessel, which can be an alternative of Configuration Example 1. Fig. 9 is a view schematically illustrating a structure of a flow straightening device 230 in accordance with Configuration Example 2. The flow straightening device 230 has, in its inside, a function of the piping part 500 of Configuration Example 1. A first side surface 111, which is close to an outlet of the flow straightening device 230, is actually removed. The whole of the first side surface 111 constitutes an outlet opening part 101. The outlet opening part 101 is directly connected to a hydrolysis reaction vessel.

A first end 122 of a tube part 132 of the flow straightening device 230 is positioned in an internal space 177. On this point, the flow straightening device 230 is the same as the flow straightening device 100 in accordance with Embodiment 3. The tube part 231 extends from the first end 122 toward the first side surface (outlet opening part 101), but does not reach the first side surface 111 (outlet opening part 101). A second end 121 of the tube part 231 is positioned inside a housing of the flow straightening device 230.

The tube part 231 has a portion which is close to the first end 122 and which has a straight tubular shape, and has another part which extends from an intermediate part of the tube part 231 to a second end 121 (outlet part) while being enlarged gradually toward the second end 121. That is, in Configuration Example 2, the tube part 231 has a tube part enlarging part 232 in which a radial cross-section area of the tube part 231 is enlarged with increasing proximity to the second end 121 (outlet part) from the first end 122 (inlet part). In Configuration Example 2, the tube part enlarging part 232 functions as the piping part 500 of Configuration Example 1.

In Configuration Example 2, the flow straightening device 230 includes, in its inside, the function of the piping part for use in connection between the flow straightening device and the hydrolysis reaction vessel. Therefore, the hydrolysis device to which the flow straightening device 230 is applied can be made more compact.

### Configuration Example 3

The description in Configuration Example 3 will discuss an example of a piping part that can be connected to an inlet opening part 102 of a flow straightening device in a hydrolysis device. In a case where there is an extreme variation in temperature and/or flow rate in a z-direction (i.e., a direction orthogonal to an axial direction of the tube part 120) in a gas stream coming from the burner unit 300 and being to be introduced to the inlet opening part 102 of the flow straightening device 100 shown in Fig. 4, the degree of unevenness may possibly not be improved adequately. Meanwhile, even in a case where there is an extreme variation in temperature in an x-direction (i.e., the axial direction of the tube part 120), a direction of the gas stream is drastically changed in the x-direction inside the flow straightening device 100. Consequently, the gas stream is well agitated and mixed, and therefore the degree of unevenness is likely to be improved.

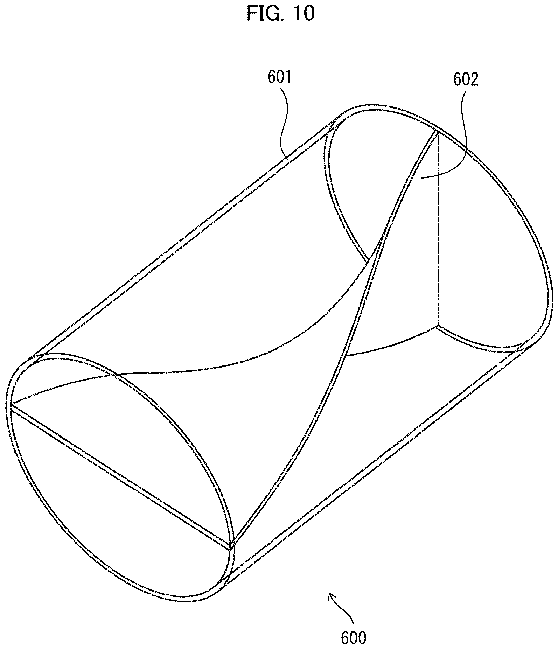

In view of the above, in a case where there is an extreme variation in temperature and/or flow rate in a certain direction in a gas stream coming from the burner unit 300 and being to be introduced to the inlet opening part 102 of the flow straightening device 100, it is preferable to set the piping part in the flow straightening device 100. Specifically, a swirl device 600 such as the one shown in Fig. 10 may be connected to the inlet opening part 102 of the flow straightening device as needed. With this, the unevenness can be changed into unevenness in a desired direction. The swirl device 600 is a piping part that causes the gas stream passing therethrough to swirl around a center axis as the gas stream advances along the swirl device 600.

As shown in Fig. 10, the swirl device 600 includes a cylindrical part 601 and a twisted plate 602 disposed inside the cylindrical part 601. The twisted plate 602 is a member that divides an internal space of the cylindrical part 601 into two and that is twisted about the center axis along an axial direction of the cylindrical part 601. When a radial cross section of the swirl device 600 is observed along the center axis, a cross section of the twisted plate 602 seems to rotate gradually.

In the swirl device 600 shown in Fig. 10, the twisted plate 602 is twisted so that an angle of 90° is made by a gas-stream inlet side and a gas-stream outlet side of the twisted plate 602. The angle at which the twisted plate 602 is twisted may be set as appropriate in accordance with the direction of the unevenness in the inlet opening part 102 of the flow straightening device 100.

### Embodiment 4

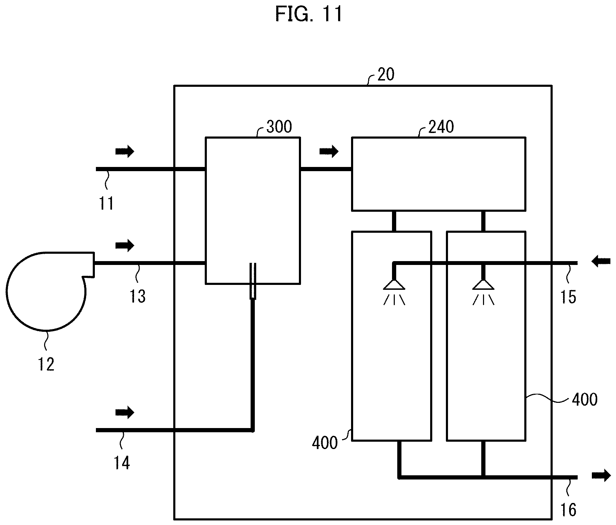

Fig. 11 is a view schematically illustrating a hydrolysis device 20 including a flow straightening device 240 in accordance with Embodiment 4. As shown in Fig. 11, the hydrolysis device 20 in accordance with Embodiment 4 includes two hydrolysis reaction vessels 400. On this point, the hydrolysis device 20 in accordance with Embodiment 4 differs from the hydrolysis device 10 in accordance with Embodiment 3. Thus, the flow straightening device 240 in accordance with Embodiment 4 has two outlets of a gas stream. Processed gases from the respective hydrolysis reaction vessels 400 are merged into one, and the merged gas is supplied to the outside through a processed gas line 16.

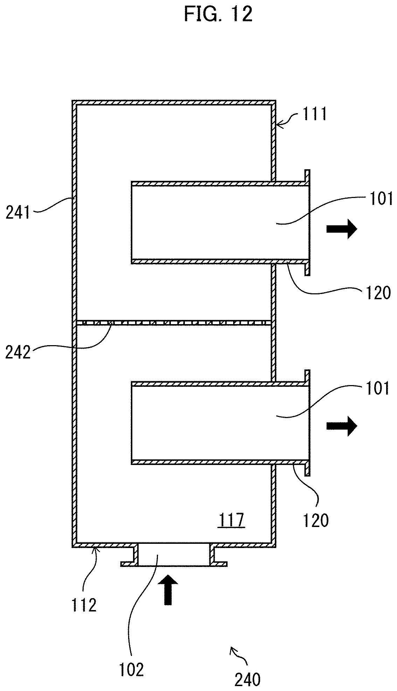

Fig. 12 is a view schematically illustrating a structure of a flow straightening device 240, and corresponds to the B-B cross-section view 1042 shown in Fig. 4. In the flow straightening device 240, a first side surface 111 of a housing 241 has two outlet opening parts 101 arranged side by side in a y-direction (i.e., a direction perpendicular to a second side surface 112). Tube parts 120 respectively penetrate through the outlet opening parts 101 so as to constitute two outlets (second ends 121 of the tube parts 120).

An internal space 117 of the housing 241 has a distribution plate 242 that extends in parallel with a second side surface 112 (i.e., in parallel with a z-x plane) and that divides the internal space 117 into two. The distribution plate 242 is made of a so-called punching board having multiple holes. The distribution plate 242 adjusts a flow rate ratio between the gas streams from the two outlets.

For a gas stream that is to be discharged through one of the tube parts 120 closer to the inlet opening part 102, the distribution plate 242 functions as a control wall that reverses at least a portion of the gas stream introduced from the inlet opening part 102 in a second direction. This function corresponds to the effects given by the fourth side surface 114 of the flow straightening device 100 in accordance with Embodiment 3. Meanwhile, for a gas stream that is to be discharged through the other of the tube parts 120 farther from the inlet opening part 102, the distribution plate 242 carries out a function corresponding to the inlet opening part 102 of the flow straightening device 100 in accordance with Embodiment 3.

Embodiment 4 also brings about similar effects given by Embodiment 3. According to the configuration in accordance with Embodiment 4, which employs a plurality of hydrolysis reaction vessels 400, it is possible to easily scale up the capacity of the hydrolysis device.

### Variation 4

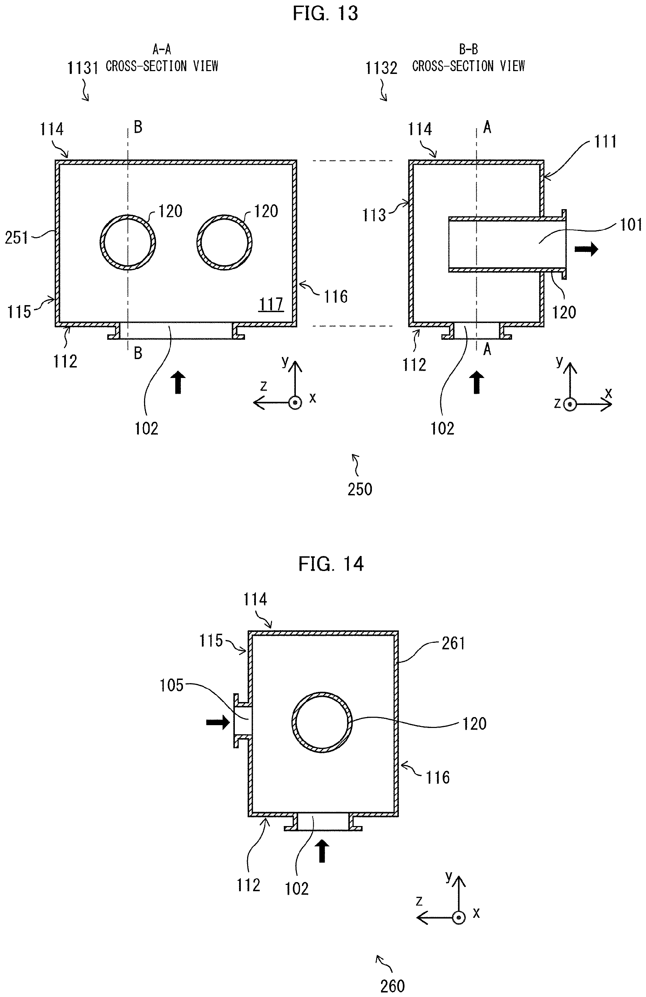

Variation 4 is a variation of Embodiment 4, and is similar to Embodiment 4 except for a configuration of a flow straightening device. Fig. 13 is a view schematically illustrating a structure of a flow straightening device 250 in accordance with Variation 4. Fig. 13 includes an A-A cross-section view 1131 of the flow straightening device 250 viewed in a front side (in an x-axis negative direction) and a B-B cross-section view 1132 of the flow straightening device 250 viewed in a left side (in a z-axis negative direction).

In the flow straightening device 250, a first side surface 111 of a housing 251 has two outlet opening parts 101 arranged side by side in a z-direction (in parallel with a second side surface 112). Tube parts 120 respectively penetrate through the outlet opening parts 101 so as to constitute two outlets (second ends 121 of the tube parts 120). The tube parts 120 respectively have center axes positioned on a plane orthogonal to a direction (y-axis direction) extending from one end of an outer tube (the first side surface 111, a fifth side surface 115, a third side surface 113, and a sixth side surface 116) to the other end of the outer tube.

The flow straightening device 250 is configured such that a gas stream introduced into an internal space 117 of the housing 251 in a second direction (y-direction) through an inlet opening part 102, which is provided in a portion of the second side surface 112, is blocked by the tube parts 120. Similarly to Embodiment 3, the tube parts 120 are partially disposed in a space virtually extended from the inlet opening part 102 in the second direction (y-direction) (i.e., in a trajectory along which the inlet opening part 102 is virtually moved in the second direction). However, in Variation 4, a center axis of the inlet opening part 102 does not intersect the tube parts 120.

### Variation 5

Variation 5 is an example in which a flow straightening device has two introduction ports of gas streams. Fig. 14 is a view schematically illustrating a structure of a flow straightening device 260 in accordance with Variation 5. In the flow straightening device 260 in accordance with Variation 5, a second side surface 112 of a housing 261 has an inlet opening part, and, in addition, a side surface (a fifth side surface in the example shown in Fig. 14) orthogonal to a first side surface 111 and to the second side surface 112 has a portion provided with an inlet opening part 105. Consequently, two introduction ports communicating with an internal space 117 are given.

The inlet opening part 105 is also disposed so as to have a center axis intersecting a tube part 120. With this, a gas stream introduced into the internal space 117 through the inlet opening part 102 is blocked by an outer peripheral surface of the tube part 120, and a gas stream introduced into the internal space 117 through the inlet opening part 105 is also blocked by the outer peripheral surface of the tube part 120.

Similarly to the flow straightening device 100 shown in Fig. 4, the flow straightening device 260 can be understood as having an outer tube constituted by the first side surface 111, the fifth side surface 115, the third side surface 113, and the sixth side surface 116 of the housing 261. In this case, the second side surface 112, which has the inlet opening part 102, is at one end of the outer tube. The second side surface 112, which has the inlet opening part 102, constitutes a flow passage enlarging part. The fourth side surface 114, which is opposed to the second side surface 112, is at the other end of the outer tube, and constitutes a control wall that reverses the gas stream introduced into the outer tube through the one end toward the other end.

Alternatively, focusing on the additional inlet opening part 105, the flow straightening device 260 can be understood as follows. That is, the outer tube is constituted by the first side surface 111, the second side surface 112, the third side surface 113, and the fourth side surface 114 of the housing 261. In this case, the fifth side surface 115, which has the inlet opening part 105, is at the one end of the outer tube. The fifth side surface 115, which has the inlet opening part 105, constitutes a flow passage enlarging part. The sixth side surface 116, which is opposed to the fifth side surface 115, is at the other end of the outer tube, and constitutes the control wall that reverses the gas stream introduced into the outer tube through the one end toward the other end. The sixth side surface 116, which is the control wall, is a wall surface without any opening, and closes the other end of the outer tube.

### Variation 6

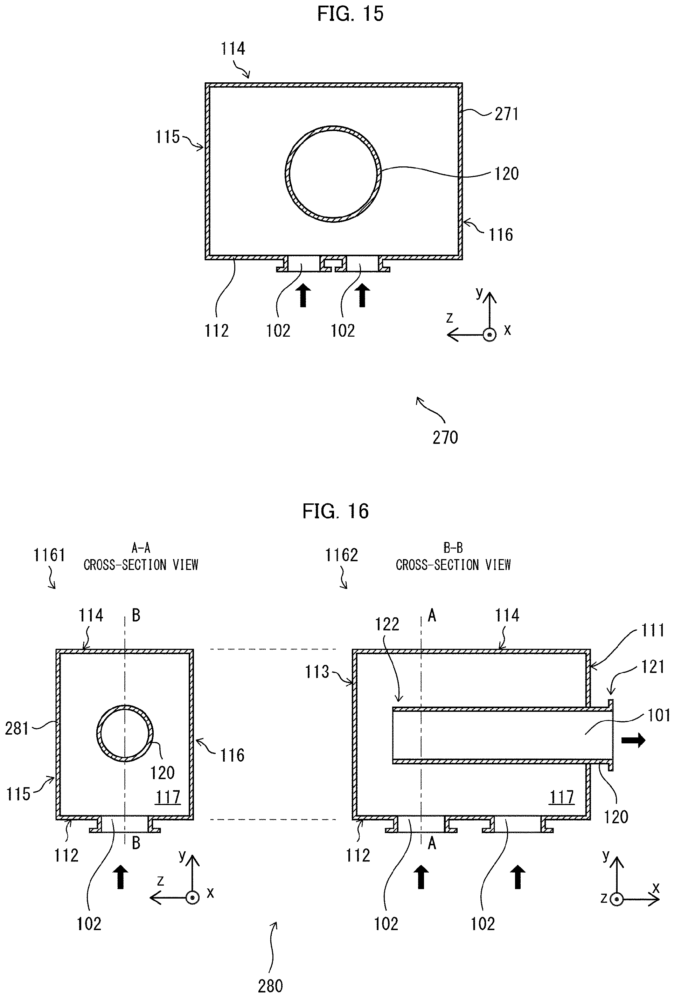

Variation 6 is another example in which a flow straightening device has two introduction ports of gas streams. Fig. 15 is a view schematically illustrating a structure of a flow straightening device 270 in accordance with Variation 6. In the flow straightening device 270 in accordance with Variation 6, a second side surface 112 of a housing 271 has two inlet opening parts 102. Consequently, two introduction ports communicating with an internal space 117 are given. The two inlet opening parts 102 are arranged along a z-axis direction.

Center axes of the inlet opening parts 102 intersect a tube part 120. With this, gas streams introduced into the internal space 117 through the inlet opening parts 102 are blocked by an outer peripheral surface of the tube part 120. In the flow straightening device 270, the fourth side surface 114 constitutes a control wall that reverses both the gas streams introduced into the internal space 117 through the inlet opening parts 102. Note that the two inlet opening parts 102 may alternatively be arranged side by side along an x-axis direction.

### Variation 7

Variation 7 is further another example in which a flow straightening device has two introduction ports of gas streams. Fig. 16 is a view schematically illustrating a structure of a flow straightening device 280 in accordance with Variation 7. Fig. 16 includes an A-A cross-section view 1161 of the flow straightening device 280 viewed in a front side (in an x-axis negative direction) and a B-B cross-section view 1162 of the flow straightening device 280 viewed in a left side (in a z-axis negative direction).

In the flow straightening device 280 in accordance with Variation 7, a second side surface 112 of a housing 281 has two inlet opening parts 102. Consequently, two introduction ports communicating with an internal space 117 are given. The two inlet opening parts 102 are arranged along an axial direction of a tube part 120, i.e., an x-axis direction.

Center axes of the inlet opening parts 102 intersect the tube part 120. With this, gas streams introduced into the internal space 117 through the inlet opening parts 102 are blocked by an outer peripheral surface of the tube part 120. In the flow straightening device 280, the fourth side surface 114 constitutes a control wall that reverses both the gas streams introduced into the internal space 117 through the inlet opening parts 102.

In a hydrolysis device to which the flow straightening device 260 in accordance with Variation 5, the flow straightening device 270 in accordance with Variation 6, or the flow straightening device 280 in accordance with Variation 7 is applied, one of the inlet opening parts may be supplied with a gas stream from a burner unit 300, and the other of the inlet opening parts may be connected to a gas extraction line 11. In this case, the gas extraction line 11 may not be connected to the burner unit 300. That is, the extraction gas and the combustion gas may be mixed in the flow straightening device 260,270,280.

### Embodiment 5

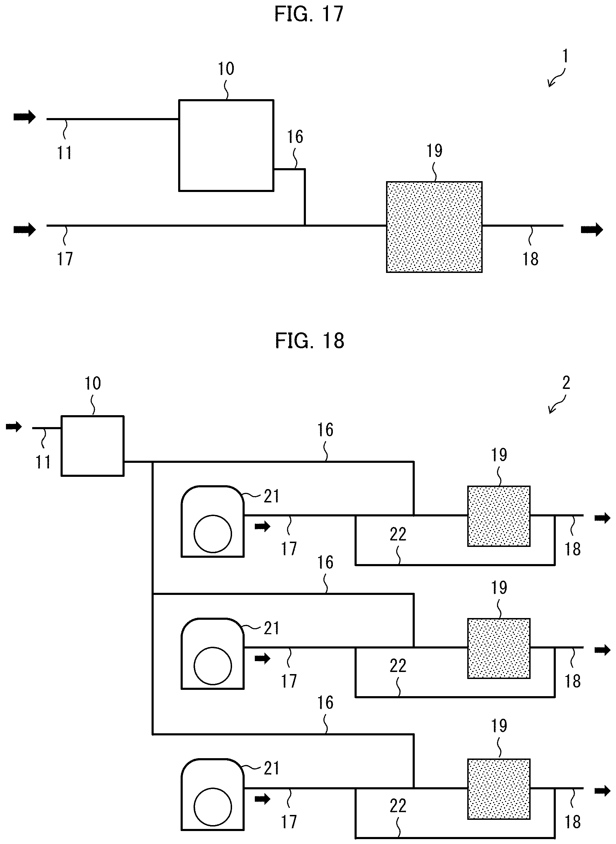

The description in Embodiment 5 will discuss a basic configuration of a NOx removal system to which the hydrolysis device 10 in accordance with Embodiment 3 is applied. Fig. 17 is a view schematically illustrating a configuration of a NOx removal system 1 in accordance with Embodiment 5. The NOx removal system 1 includes the hydrolysis device 10 and a NOx removal catalyst 19. The NOx removal system 1 includes a gas extraction line 11, a processed gas line 16, an exhaust gas line 17, and an exhaust line 18.

Note that, actually, the lines shown in Fig. 3 are connected to the hydrolysis device 10. However, for the purpose of avoiding complexity in the drawings, Fig. 17 shows only the gas extraction line 11 and the processed gas line 16 out of the lines connected to the hydrolysis device 10. This applies also to the later-described embodiments.

The hydrolysis device 10 receives an extraction gas introduced thereto through the gas extraction line 11. A processed gas, which is a high-temperature gas containing ammonia, is supplied to the NOx removal catalyst 19 through the processed gas line 16. The NOx removal catalyst 19 receives an exhaust gas introduced thereto from an engine such as a diesel engine through the exhaust gas line 17.

The processed gas line 16 is merged into the exhaust gas line at a location upstream of a portion where introduction into the NOx removal catalyst 19 takes place. Thus, the processed gas from the hydrolysis device 10 is mixed in the exhaust gas before being introduced into the NOx removal catalyst 19. The processed gas containing ammonia is mixed in the exhaust gas, and a resultant gas passes through the NOx removal catalyst 19. Consequently, a NOx removal treatment is carried out on the exhaust gas. The exhaust gas thus purified is discharged from the NOx removal catalyst 19 through the exhaust line 18.

### Embodiment 6

The description in Embodiment 6 will discuss an example of a basic configuration of a NOx removal system to which the hydrolysis device 10 in accordance with Embodiment 3 is applied. In Embodiment 6, the NOx removal system processes exhaust gases from a plurality of engines. Fig. 18 is a view schematically illustrating a configuration of a NOx removal system 2 in accordance with Embodiment 6. Fig. 18 shows three engines 21 as an example of the plurality of engines.

The NOx removal system 2 includes one hydrolysis device 10 and three NOx removal catalysts 19 respectively provided for the engines 21. The NOx removal system 2 includes a gas extraction line 11 and a processed gas line 16. The NOx removal system 2 further includes three sets of exhaust gas lines 17, exhaust lines 18, and bypass lines 22, respectively provided for the engines 21.

The hydrolysis device 10 receives an extraction gas introduced thereto through the gas extraction line 11. A processed gas is supplied to the NOx removal catalysts 19 through the processed gas line 16. The NOx removal catalysts 19 respectively receive exhaust gases introduced thereto from their corresponding engines 21 through the exhaust gas lines 17. The processed gas line 16 is branched into a plurality of lines, which are respectively merged into the exhaust gas lines 17. With this, the processed gas from the hydrolysis device 10 is mixed in the exhaust gases before being introduced into the NOx removal catalysts 19. The processed gas containing ammonia is mixed in the exhaust gases, and resultant gases pass through the NOx removal catalysts 19. Consequently, a NOx removal treatment is carried out on the exhaust gases. The exhaust gases thus purified are discharged from the NOx removal catalysts 19 through the exhaust lines 18, respectively.

From each of the exhaust gas lines 17, a corresponding one of the bypass lines 22 is branched off at a location upstream of a part in which a corresponding one of the processed gas lines 16 is merged into the each of the exhaust gas lines 17. Each of the bypass lines 22 has an end connected to a corresponding one of the exhaust lines 18. The bypass lines 22 are piping (bypass mechanism) for causing the exhaust gases from the engines 21 to directly flow into the exhaust lines 18, not through the NOx removal catalysts 19.

Valves are respectively provided to (i) a part where each of the bypass lines 22 is branched off from a corresponding one of the exhaust gas lines 17 and (ii) a part where the each of the bypass lines 22 is merged into a corresponding one of the exhaust lines 18. Depending on the operating states of each of the engines 21 and the NOx removal system 2, opening and closing of the valves are regulated so as to appropriately control (i) a ratio between a portion of the exhaust gas from the each of the engines 21 which portion is caused to pass through a corresponding one of the NOx removal catalysts 19 (NOx removal mechanism side) and a portion of the exhaust gas from the each of the engines 21 which portion is caused to pass through a corresponding one of the bypass lines 22 (bypass mechanism side) and/or (ii) closing of each line. According to Embodiment 6, it is possible to provide a NOx removal system 2 that can deal with exhaust gases from a plurality of engines.

An extraction gas to be supplied to the hydrolysis device 10 through the gas extraction line 11 may be taken at a position in each exhaust gas line 17 or each exhaust line 18. The position where the extraction gas is taken can be selected as appropriate on the basis of known techniques. This also applies to the other embodiments and the other configuration examples.

### Embodiment 7

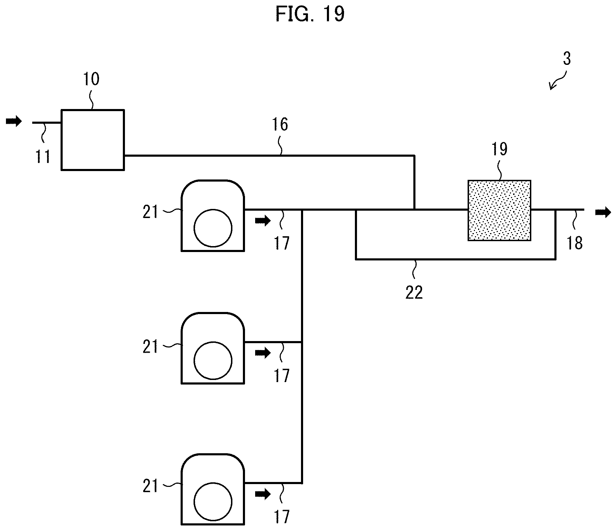

The description in Embodiment 7 will discuss another example of a configuration of a NOx removal system to which the hydrolysis device 10 in accordance with Embodiment 3 is applied. In Embodiment 7, the NOx removal system processes exhaust gases from a plurality of engines. Fig. 19 is a view schematically illustrating a configuration of a NOx removal system 3 in accordance with Embodiment 7. Fig. 19 shows three engines 21 as an example of the plurality of engines.

The NOx removal system 3 includes one hydrolysis device 10 and one NOx removal catalyst 19 provided for the three engines 21. The NOx removal system 3 also includes a gas extraction line 11 and a processed gas line 16. The NOx removal system 3 further includes an exhaust line 18, a bypass line 22, and three exhaust gas lines 17 respectively provided for the engines 21. The three exhaust gas lines 17 are merged into one, and the merged line is connected to the NOx removal catalyst 19.

The hydrolysis device 10 receives an extraction gas introduced thereto through the gas extraction line 11. A processed gas is supplied to the NOx removal catalyst 19 through the processed gas line 16. The processed gas line 16 is further merged into the merged line into which the three exhaust gas lines 17 are merged. With this, the processed gas from the hydrolysis device 10 is mixed in the exhaust gas before being introduced into the NOx removal catalyst 19. The processed gas containing ammonia is mixed in the exhaust gas, and a resultant gas passes through the NOx removal catalyst 19. Consequently, a NOx removal treatment is carried out on the exhaust gas. The exhaust gas thus purified is discharged from the NOx removal catalyst 19 through the exhaust line 18.

From the exhaust gas line 17, the bypass line 22 is branched off at a location upstream of a part in which the processed gas line 16 is merged into the exhaust gas line 17. The bypass line 22 has an end connected to the exhaust line 18. The bypass line 22 is piping (bypass mechanism) for causing the exhaust gases from the engines 21 to directly flow into the exhaust line 18, not through the NOx removal catalyst 19.

Valves are respectively provided to (i) a part where the bypass line 22 is branched off from the exhaust gas line 17 and (ii) a part where the bypass line 22 is merged into the exhaust line 18. Depending on the operating states of each of the engines 21 and the NOx removal system 3, opening and closing of the valves are regulated so as to appropriately control (i) a ratio between a portion of an exhaust gas from the each of the engines 21 that is caused to pass through the NOx removal catalyst 19 (NOx removal mechanism side) and a portion of the exhaust gas from the each of the engines 21 that is caused to pass through the bypass line 22 (bypass mechanism side) and/or (ii) closing of each line. According to Embodiment 7, it is possible to provide a NOx removal system 3 that can deal with exhaust gases from a plurality of engines.

Aspects of the present invention can also be expressed as follows:
A flow straightening device in accordance with a first aspect of the present invention is a flow straightening device through which a gas stream passes before being introduced into a hydrolysis reaction vessel that causes a hydrolysis reaction of urea water, the flow straightening device including: an outer tube into which the gas stream flows through one end of the outer tube toward the other end of the outer tube; a control wall positioned inside the outer tube or at the other end of the outer tube, the control wall reversing at least a portion of the gas stream flowing into the outer tube through the one end toward the other end; and at least one tube part which is at least partially positioned at a location that is inside the outer tube and that is between the one end and the control wall, the at least one tube part constituting a flow passage of the gas stream flowing from an inside of the outer tube toward an outside of the outer tube through a side wall of the outer tube so as to introduce the gas stream inside the outer tube into the hydrolysis reaction vessel, the at least one tube part having an inlet part and an outlet part for the gas stream.

A flow straightening device in accordance with a second aspect of the present invention may be configured such that, in the first aspect, the inlet part of the at least one tube part is positioned at a location that is inside the outer tube and that is between the one end and the control wall, the outlet part is positioned outside the outer tube, and the at least one tube part has an outer peripheral surface positioned to block at least a portion of the gas stream flowing into the outer tube through the one end toward the other end.

A flow straightening device in accordance with a third aspect of the present invention may be configured to such that, in the first or second aspect, the flow straightening device further includes a separation plate having a planar shape, the separation plate being disposed at a location that is inside the outer tube and that is between the at least one tube part and the control wall, the separation plate extending in a longitudinal direction of the at least one tube part and in a direction extending from the one end toward the other end.

A flow straightening device in accordance with a fourth aspect of the present invention may be configured such that, in any of the first to third aspects, the at least one tube part has a tube part enlarging part in which a radial cross-section area of the at least one tube part is enlarged with increasing proximity to the outlet part from the inlet part.

A flow straightening device in accordance with a fifth aspect of the present invention may be configured such that, in any of the first to fourth aspects, the one end of the outer tube has a flow passage enlarging part in which a cross-section area of a flow passage of the gas stream flowing into the outer tube through the one end toward the other end is enlarged.

A flow straightening device in accordance with a sixth aspect of the present invention may be configured such that, in the fifth aspect, the flow passage enlarging part has a minimum portion in which a cross-section area of the flow passage is smaller than that of any other portion of the flow passage enlarging part, said at least one tube part has a minimum portion having a radial cross-section area smaller than that of any other portion of said at least one tube part, and the cross-section area of the minimum portion of the flow passage enlarging part is equal to or greater than the radial cross-section area of the minimum portion of said at least one tube part.

A flow straightening device in accordance with a seventh aspect of the present invention may be configured such that, in any of the first to sixth aspects, the outer tube has a side wall which is opposed to the inlet part of the at least one tube part and which is provided with a maintenance opening part and a closing plate that is detachable and that is configured to close the maintenance opening part.

A flow straightening device in accordance with an eighth aspect of the present invention may be configured such that, in any of the first to seventh aspects, the control wall closes the other end of the outer tube.

A flow straightening device in accordance with a ninth aspect of the present invention may be configured such that, in the first or eighth aspect, the at least one tube part includes a plurality of tube parts, and the plurality of tube parts respectively have center axes positioned on a plane substantially orthogonal to a direction extending from the one end of the outer tube toward the other end of the outer tube.

A hydrolysis device in accordance with a tenth aspect of the present invention includes: a flow straightening device described in any of the first to ninth aspects; a hydrolysis reaction vessel that causes a hydrolysis reaction of urea water; and a burner unit configured to burn a fuel so as to supply a heated gas to the flow straightening device.

A hydrolysis device in accordance with an eleventh aspect of the present invention includes: a flow straightening device described in the ninth aspect; a plurality of hydrolysis reaction vessels each of which is configured to cause a hydrolysis reaction of urea water and to receive a gas stream flowing out of a corresponding one of the plurality of tube parts; and a burner unit configured to burn a fuel so as to supply a heated gas to the flow straightening device.

A hydrolysis device in accordance with a twelfth aspect of the present invention may be configured such that, in the tenth or eleventh aspect, the hydrolysis device further includes a swirl device configured to cause a gas stream coming from the burner unit to swirl around a center axis of the outer tube and then to introduce the gas stream into the flow straightening device through the one end of the outer tube.

A hydrolysis device in accordance with a thirteenth aspect of the present invention may be configured such that, in any of the tenth to twelfth aspects, the hydrolysis reaction vessel comprises one or more hydrolysis reaction vessels each of which has a tubular shape elongated in an axial direction of the hydrolysis reaction vessel, the burner unit includes a combustion chamber that burns the fuel, the combustion chamber having a tubular shape elongated in an axial direction of the combustion chamber, and the one or more hydrolysis reaction vessels and the burner unit are arranged so that axial directions of the one or more hydrolysis reaction vessels are in parallel with the axial direction of the combustion chamber.

A NOx removal system in accordance with a fourteenth aspect of the present invention is a NOx removal system that carries out a NOx removal treatment on an exhaust gas from an engine, including: a hydrolysis device described in any of the tenth to thirteenth aspects; and a NOx removal mechanism configured to mix the exhaust gas with a processed gas from the hydrolysis reaction vessel to yield a mixture gas, to introduce the mixture gas into a NOx removal catalyst, and then to discharge a resultant.

A NOx removal system in accordance with a fifteenth aspect of the present invention is a NOx removal system that carries out a NOx removal treatment on exhaust gases from a plurality of engines, including: a hydrolysis device described in any of the tenth to thirteenth aspects; and NOx removal mechanisms and bypass mechanisms respectively provided for the plurality of engines, wherein the NOx removal mechanisms are configured to respectively mix the exhaust gases from the plurality of engines with a processed gas from the hydrolysis reaction vessel to yield mixture gases, to introduce the mixture gases into NOx removal catalysts, and then to discharge resultants; and the bypass mechanisms are configured to respectively cause the exhaust gases from the plurality of engines to bypass the NOx removal mechanisms so as to discharge the exhaust gases.

A NOx removal system in accordance with a sixteenth aspect of the present invention is a NOx removal system that carries out a NOx removal treatment on exhaust gases from a plurality of engines, including: a hydrolysis device described in any of the tenth to thirteenth aspects; and a NOx removal mechanism configured to mix the exhaust gases from the plurality of engines with a processed gas from the hydrolysis reaction vessel to yield a mixture gas, to introduce the mixture gas into a NOx removal catalyst, and then to discharge a resultant; and a bypass mechanism configured to cause the exhaust gases from the plurality of engines to bypass the NOx removal mechanism so as to discharge the exhaust gases.

A flow straightening device in accordance with a seventeenth aspect of the present invention is a flow straightening device through which a gas stream passes before being introduced into a hydrolysis reaction vessel that causes a hydrolysis reaction of urea water, the flow straightening device including: a housing; at least one tube part; and a control wall, wherein the at least one tube part has a first end positioned in an internal space of the housing, the at least one tube part is disposed to extend in a first direction from the first end, the at least one tube part constitutes a flow passage of the gas stream flowing from the internal space of the housing toward an outside of the housing through an outlet opening part, which is provided in a portion of the housing so as to face the first direction from the first end, the housing has, in a portion thereof, an inlet opening part through which the gas stream is introduced from the outside in a second direction toward the internal space of the housing, the control wall is disposed at a location that is opposed to the inlet opening part and faces the internal space or at a position inside the internal space so that the control wall is positioned on a side opposed in the second direction to the inlet opening part across the at least one tube part, at least a portion of the gas stream introduced from the inlet opening part in the second direction is revered by the control wall, and the first direction and the second direction are different directions.

A flow straightening device in accordance with an eighteenth aspect of the present invention is a flow straightening device through which a gas stream passes before being introduced into a hydrolysis reaction vessel that causes a hydrolysis reaction of urea water, the flow straightening device including: a housing; and at least one tube part, wherein the at least one tube part has a first end positioned in an internal space of the housing, the at least one tube part is disposed to extend in a first direction from the first end, the at least one tube part constitutes a flow passage of the gas stream flowing from the internal space of the housing toward an outside of the housing through an outlet opening part, which is provided in a portion of the housing so as to face the first direction from the first end, the housing has, in a portion thereof, an inlet opening part through which the gas stream is introduced from the outside in a second direction toward the internal space of the housing, and the first direction and the second direction are different directions.

A flow straightening device in accordance with a nineteenth aspect of the present invention may be configured such that, in the eighteenth aspect, at least a portion of the gas stream introduced from the inlet opening part in the second direction is reversed by a portion of the housing which portion is opposed to the inlet opening part.

A flow straightening device in accordance with a twentieth aspect of the present invention may be configured such that, in any of the seventeenth to nineteenth aspects, an outer surface of the at least one tube part is positioned so as to block the gas stream being introduced from the inlet opening part in the second direction.

A flow straightening device in accordance with a twenty-first aspect of the present invention may be configured such that, in any of the seventeenth to twentieth aspects, the at least one tube part is at least partially positioned in a space virtually extended from the inlet opening part in the second direction.

A flow straightening device in accordance with a twenty-second aspect of the present invention may be configured such that, in any of the seventeenth to twenty-first aspects, a center axis of the inlet opening part intersects the at least one tube part.

A flow straightening device in accordance with a twenty-third aspect of the present invention may be configured such that, in any of the seventeenth to twenty-second aspects, the gas stream introduced from the inlet opening part in the second direction has a cross-section area that is enlarged when the gas stream is introduced from the inlet opening part into the internal space of the housing.

A flow straightening device in accordance with a twenty-fourth aspect of the present invention may be configured such that, in any of the seventeenth to twenty-third aspects, the first direction and the second direction are substantially perpendicular to each other.

A flow straightening device in accordance with a twenty-fifth aspect of the present invention may be configured such that, in any of the seventeenth to twenty-fourth aspects, the flow straightening device further includes a separation plate having a planar shape, the separation plate being disposed at a location that is in the internal space of the housing and that is opposite to the inlet opening part across the at least one tube part, the separation plate being substantially in parallel with the first direction and the second direction.

A flow straightening device in accordance with a twenty-sixth aspect of the present invention may be configured such that, in any of the seventeenth to twenty-fifth aspects, the at least one tube part has a portion which is close to the first end and which has a diameter enlarged with increasing proximity to the first end.

A flow straightening device in accordance with a twenty-seventh aspect of the present invention may be configured such that, in any of the seventeenth to twenty-sixth aspects, the housing has a portion which is opposed to the outlet opening part and which is provided with a maintenance opening part and a closing plate that is detachable and that is configured to close the maintenance opening part.

A flow straightening device in accordance with a twenty-eighth aspect of the present invention may be configured such that, in any of the seventeenth to twenty-seventh aspects, the at least one tube part includes a plurality of tube parts.

A hydrolysis device in accordance with a twenty-ninth aspect of the present invention includes: a flow straightening device described in any of the seventeenth to twenty-eighth aspects; a hydrolysis reaction vessel that causes a hydrolysis reaction of urea water; and a burner unit configured to burn a fuel so as to supply a heated gas to the flow straightening device.

A hydrolysis device in accordance with a thirtieth aspect of the present invention includes: a flow straightening device described in the twenty-eighth aspect; a plurality of hydrolysis reaction vessels each of which is configured to cause a hydrolysis reaction of urea water and to receive a gas stream flowing out of a corresponding one of the plurality of tube parts; and a burner unit configured to burn a fuel so as to supply a heated gas to the flow straightening device.

A hydrolysis device in accordance with a thirty-first aspect of the present invention may be configured such that, in the twenty-ninth or thirtieth aspect, the hydrolysis device further includes a swirl device configured to cause a gas stream coming from the burner unit to swirl around a center axis of the inlet opening part so as to be introduced into the flow straightening device through the inlet opening part.

A hydrolysis device in accordance with a thirty-second aspect of the present invention may be configured such that, in any of the twenty-ninth to thirty-first aspects, the hydrolysis reaction vessel comprises one or more hydrolysis reaction vessels each of which has a tubular shape elongated in an axial direction of the hydrolysis reaction vessel, the burner unit includes a combustion chamber that burns the fuel, the combustion chamber having a tubular shape elongated in an axial direction of the combustion chamber, and the one or more hydrolysis reaction vessels and the burner unit are arranged so that axial directions of the one or more hydrolysis reaction vessels are in parallel with the axial direction of the combustion chamber.

A NOx removal system in accordance with a thirty-third aspect of the present invention is a NOx removal system that carries out a NOx removal treatment on an exhaust gas from an engine, including: a hydrolysis device described in any of the twenty-ninth to thirty-second aspects; and a NOx removal mechanism configured to mix the exhaust gas with a processed gas from the hydrolysis reaction vessel to yield a mixture gas, to introduce the mixture gas into a NOx removal catalyst, and then to discharge a resultant.

A NOx removal system in accordance with a thirty-fourth aspect of the present invention is a NOx removal system that carries out a NOx removal treatment on exhaust gases from a plurality of engines, including: a hydrolysis device described in any of the twenty-ninth to thirty-second aspects; and NOx removal mechanisms and bypass mechanisms respectively provided for the plurality of engines, wherein the NOx removal mechanisms are configured to respectively mix the exhaust gases from the plurality of engines with a processed gas from the hydrolysis reaction vessel to yield mixture gases, to introduce the mixture gases into NOx removal catalysts, and then to discharge resultants, and the bypass mechanisms are configured to respectively cause the exhaust gases from the plurality of engines to bypass the NOx removal mechanisms so as to discharge the exhaust gases.

A NOx removal system in accordance with a thirty-fifth aspect of the present invention is a NOx removal system that carries out a NOx removal treatment on exhaust gases from a plurality of engines, including: a hydrolysis device described in any of the twenty-ninth to thirty-second aspects; and a NOx removal mechanism configured to mix the exhaust gases from the plurality of engines with a processed gas from the hydrolysis reaction vessel to yield a mixture gas, to introduce the mixture gas into a NOx removal catalyst, and then to discharge a resultant; and a bypass mechanism configured to cause the exhaust gases from the plurality of engines to bypass the NOx removal mechanism so as to discharge the exhaust gases.

### Reference Signs List

1, 2, 3: NOx removal system
11: Gas extraction line
12: Blower
13: External air line
14: Fuel line
15: Supply line
16: Processed gas line
17: Exhaust gas line
18: Exhaust line
19: NOx removal catalyst
21: Engine
22: Bypass line
10, 20: Hydrolysis device
300: Burner unit
301: Combustion chamber
302: Burner
400: Hydrolysis reaction vessel
401: Nozzle
500: Piping part
600: Swirl device
601: Cylindrical part
602: Twisted plate
100, 100A, 100B, 200, 210, 220, 230, 240, 250, 260, 270, 280: Flow straightening device
110, 241, 251, 261, 271, 281: Housing
110A, 110B: Outer tube
111: First side surface
112: Second side surface
113: Third side surface
114: Fourth side surface (control wall)
115: Fifth side surface
116: Sixth side surface
114A: Control wall
117: Internal space
101, 101A: Outlet opening part
102, 102A, 102B, 105: Inlet opening part
103: Maintenance opening part
120, 120A, 120B, 211, 231: Tube part
121: Second end (outlet part)
121A, 121B: Outlet part
122: First end (inlet part)
122A, 122B: Inlet part
212: Tapered part
232: Tube part enlarging part
201: Separation plate
221: Closing plate
242, 242B: Distribution plate (control wall)

## Claims

1. A flow straightening device (100) through which a gas stream passes before being introduced into a hydrolysis reaction vessel (400) that causes a hydrolysis reaction of urea water, said flow straightening device (100) comprising:
an outer tube (110) into which the gas stream flows through one end of the outer tube (110) toward the other end of the outer tube (110) which is opposite to the one end;
a control wall (114) positioned inside the outer tube (110) or at the other end of the outer tube (110), the control wall (114) reversing at least a portion of the gas stream flowing into the outer tube (110) through the one end toward the other end; and
at least one tube part (120) which is at least partially positioned at a location that is inside the outer tube (110) and that is between the one end and the control wall (114), said at least one tube part (120) constituting a flow passage of the gas stream flowing from an inside of the outer tube (110) toward an outside of the outer tube (110) through a side wall (111) of the outer tube (110) so as to introduce the gas stream inside the outer tube (110) into the hydrolysis reaction vessel (400), said at least one tube part (120) having an inlet part (122) and an outlet part (121) for the gas stream.

2. The flow straightening device (100) as set forth in claim 1, wherein
the inlet part (122) of said at least one tube part (120) is positioned at a location that is inside the outer tube (110) and that is between the one end and the control wall (114),
the outlet part (121) is positioned outside the outer tube (110), and
said at least one tube part (120) has an outer peripheral surface positioned to block at least a portion of the gas stream flowing into the outer tube (110) through the one end toward the other end.

3. The flow straightening device (100) as set forth in claim 1 or 2, further comprising:
a separation plate (201) having a planar shape, the separation plate (201) being disposed at a location that is inside the outer tube (110) and that is between said at least one tube part (120) and the control wall (114), the separation plate (201) extending in a longitudinal direction of said at least one tube part (120) and in a direction extending from the one end toward the other end.

4. The flow straightening device (100) as set forth in any one of claims 1 to 3, wherein
said at least one tube part (120) has a tube part (120) enlarging part in which a radial cross-section area of said at least one tube part (120) is enlarged with increasing proximity to the outlet part (121) from the inlet part (122).

5. The flow straightening device (100) as set forth in any one of claims 1 to 4, wherein
the one end of the outer tube (110) has a flow passage enlarging part in which a cross-section area of a flow passage of the gas stream flowing into the outer tube (110) through the one end toward the other end is enlarged.

6. The flow passage enlarging part as set forth in claim 5, wherein
the flow passage enlarging part has a minimum portion in which a cross-section area of the flow passage is smaller than that of any other portion of the flow passage enlarging part, said at least one tube part (120) has a minimum portion having a radial cross-section area smaller than that of any other portion of said at least one tube part (120), and the cross-section area of the minimum portion of the flow passage enlarging part is equal to or greater than the radial cross-section area of the minimum portion of said at least one tube part (120).

7. The flow straightening device (100) as set forth in any one of claims 1 to 6, wherein
the outer tube (110) has a side wall which is opposed to the inlet part (122) of said at least one tube part (120) and which is provided with a maintenance opening part (103) and a closing plate (221) that is detachable and that is configured to close the maintenance opening part (103).

8. The flow straightening device (100) as set forth in any one of claims 1 to 7, wherein
the control wall (114) closes the other end of the outer tube (110).

9. The flow straightening device (100) as set forth in any one of claims 1 to 8, wherein
said at least one tube part (120) comprises a plurality of tube parts (120), and
the plurality of tube parts (120) respectively have center axes positioned on a plane substantially orthogonal to a direction extending from the one end of the outer tube (110) toward the other end of the outer tube (110).

10. A hydrolysis device (10, 20) comprising:
a flow straightening device (100) recited in any one of claims 1 to 9;
a hydrolysis reaction vessel (400) that causes a hydrolysis reaction of urea water; and
a burner unit (300) configured to burn a fuel so as to supply a heated gas to the flow straightening device (100).

11. A hydrolysis device (10, 20) comprising:
a flow straightening device (100) recited in claim 9;
a plurality of hydrolysis reaction vessels (400) each of which is configured to cause a hydrolysis reaction of urea water and to receive a gas stream flowing out of a corresponding one of the plurality of tube parts (120); and
a burner unit (300) configured to burn a fuel so as to supply a heated gas to the flow straightening device (100).

12. The hydrolysis device (10, 20) as set forth in claim 10 or 11, further comprising:
a swirl device (600) configured to cause a gas stream coming from the burner unit (300) to swirl around a center axis of the outer tube (110) and then to introduce the gas stream into the flow straightening device (100) through the one end of the outer tube (110).

13. The hydrolysis device (10, 20) as set forth in any one of claims 10 to 12, wherein
the hydrolysis reaction vessel (400) comprises one or more hydrolysis reaction vessels (400) each of which has a tubular shape elongated in an axial direction of the hydrolysis reaction vessel (400),
the burner unit (300) includes a combustion chamber (301) that burns the fuel, the combustion chamber (301) having a tubular shape elongated in an axial direction of the combustion chamber (301), and
the one or more hydrolysis reaction vessels (400) and the burner unit (300) are arranged so that axial directions of the one or more hydrolysis reaction vessels (400) are in parallel with the axial direction of the combustion chamber (301).

14. A NOx removal system (1) that carries out a NOx removal treatment on an exhaust gas from an engine (21), comprising:
a hydrolysis device (10, 20) recited in any one of claims 10 to 13; and
a NOx removal mechanism configured to mix the exhaust gas with a processed gas from the hydrolysis reaction vessel (400) to yield a mixture gas, to introduce the mixture gas into a NOx removal catalyst, and then to discharge a resultant.

15. A NOx removal system (1) that carries out a NOx removal treatment on exhaust gases from a plurality of engines (21), comprising:
a hydrolysis device (10, 20) recited in any one of claims 10 to 13; and
NOx removal mechanisms and bypass mechanisms respectively provided for the plurality of engines (21), wherein
the NOx removal mechanisms are configured to respectively mix the exhaust gases from the plurality of engines (21) with a processed gas from the hydrolysis reaction vessel (400) to yield mixture gases, to introduce the mixture gases into NOx removal catalysts, and then to discharge resultants; and
the bypass mechanisms are configured to respectively cause the exhaust gases from the plurality of engines (21) to bypass the NOx removal mechanisms so as to discharge the exhaust gases.

16. A NOx removal system (1) that carries out a NOx removal treatment on exhaust gases from a plurality of engines (21), comprising:
a hydrolysis device (10, 20) recited in any one of claims 10 to 13; and
a NOx removal mechanism configured to mix the exhaust gases from the plurality of engines (21) with a processed gas from the hydrolysis reaction vessel (400) to yield a mixture gas, to introduce the mixture gas into a NOx removal catalyst, and then to discharge a resultant; and
a bypass mechanism configured to cause the exhaust gases from the plurality of engines (21) to bypass the NOx removal mechanism so as to discharge the exhaust gases.

## Patentansprüche

1. Strömungsbegradigungsvorrichtung (100), durch die ein Gasstrom strömt, bevor er in ein Hydrolyse-Reaktionsgefäß (400) eingeleitet wird, das eine Hydrolyse-Reaktion von Harnstoffwasser bewirkt, wobei die Strömungsbegradigungsvorrichtung (100) umfasst:
ein Außenrohr (110), in das der Gasstrom durch ein Ende des Außenrohrs (110) zum anderen Ende des Außenrohrs (110) strömt, das dem einen Ende gegenüberliegt;
eine Steuerwand (114), die innerhalb des Außenrohrs (110) oder am anderen Ende des Außenrohrs (110) angeordnet ist, wobei die Steuerwand (114) mindestens einen Teil des Gasstroms, der in das Außenrohr (110) durch das eine Ende zum anderen Ende strömt, umkehrt; und
mindestens einen Rohrteil (120), der zumindest teilweise an einer Stelle angeordnet ist, die sich im Inneren des Außenrohrs (110) und zwischen dem einen Ende und der Steuerwand (114) befindet, wobei der mindestens eine Rohrteil (120) einen Strömungsdurchgang des Gasstroms bildet, der von einer Innenseite des Außenrohrs (110) zu einer Außenseite des Außenrohrs (110) durch eine Seitenwand (111) des Außenrohrs (110) strömt, um den Gasstrom innerhalb des Außenrohrs (110) in das Hydrolyse-Reaktionsgefäß (400) einzuführen, wobei der mindestens eine Rohrteil (120) einen Einlassteil (122) und einen Auslassteil (121) für den Gasstrom aufweist.

2. Strömungsbegradigungsvorrichtung (100) nach Anspruch 1, wobei
der Einlassteil (122) des mindestens einen Rohrteils (120) an einer Stelle positioniert ist, die sich im Inneren des Außenrohrs (110) befindet und die zwischen dem einen Ende und der Steuerwand (114) liegt,
der Auslassteil (121) außerhalb des Außenrohrs (110) angeordnet ist, und
der mindestens eine Rohrteil (120) eine äußere Umfangsfläche aufweist, die so angeordnet ist, dass sie mindestens einen Teil des Gasstroms blockiert, der in das Außenrohr (110) durch das eine Ende in Richtung des anderen Endes fließt.

3. Strömungsbegradigungsvorrichtung (100) nach Anspruch 1 oder 2, ferner umfassend:
eine Trennplatte (201) mit einer ebenen Form, wobei die Trennplatte (201) an einer Stelle angeordnet ist, die sich im Inneren des Außenrohrs (110) befindet und die zwischen dem mindestens einen Rohrteil (120) und der Steuerwand (114) liegt, wobei sich die Trennplatte (201) in einer Längsrichtung des mindestens einen Rohrteils (120) und in einer Richtung erstreckt, die sich von dem einen Ende zu dem anderen Ende erstreckt.

4. Strömungsbegradigungsvorrichtung (100) nach einem der Ansprüche 1 bis 3, wobei
der mindestens eine Rohrteil (120) einen Rohrteilvergrößerungsteil aufweist, in dem eine radiale Querschnittsfläche des mindestens einen Rohrteils (120) mit zunehmender Nähe zum Auslassteil (121) vom Einlassteil (122) vergrößert wird.

5. Strömungsbegradigungsvorrichtung (100) nach einem der Ansprüche 1 bis 4, wobei
das eine Ende des Außenrohrs (110) einen Strömungsdurchgangsvergrößerungsteil aufweist, in dem eine Querschnittsfläche eines Strömungsdurchgangs des Gasstroms, der in das Außenrohr (110) durch das eine Ende zum anderen Ende strömt, vergrößert wird.

6. Strömungsdurchgangsvergrößerungsteil nach Anspruch 5, wobei
der Strömungsdurchgangsvergrößerungsteil einen minimalen Abschnitt aufweist, in dem eine Querschnittsfläche des Strömungsdurchgangs kleiner ist als die eines beliebigen anderen Abschnitts des Strömungsdurchgangsvergrößerungsteils, der mindestens eine Rohrteil (120) einen minimalen Abschnitt aufweist, der eine radiale Querschnittsfläche aufweist, die kleiner ist als die eines beliebigen anderen Abschnitts des mindestens einen Rohrteils (120), und die Querschnittsfläche des minimalen Abschnitts des Strömungsdurchgangsvergrößerungsteil gleich oder größer ist als die radiale Querschnittsfläche des minimalen Abschnitts des mindestens einen Rohrteils (120).

7. Strömungsbegradigungsvorrichtung (100) nach einem der Ansprüche 1 bis 6, wobei
das Außenrohr (110) eine Seitenwand hat, die dem Einlassabschnitt (122) des mindestens einen Rohrteils (120) gegenüberliegt und die mit einem Wartungsöffnungsteil (103) und einer Verschlussplatte (221) versehen ist, die abnehmbar ist und die dazu konfiguriert ist, den Wartungsöffnungsteil (103) zu schließen.

8. Strömungsbegradigungsvorrichtung (100) nach einem der Ansprüche 1 bis 7, wobei
die Steuerwand (114) das andere Ende des Außenrohrs (110) verschließt.

9. Strömungsbegradigungsvorrichtung (100) nach einem der Ansprüche 1 bis 8, wobei
der mindestens eine Rohrteil (120) eine Vielzahl von Rohrteilen (120) umfasst, und
die Vielzahl von Rohrteile (120) jeweils Mittelachsen aufweisen, die auf einer Ebene positioniert sind, die im Wesentlichen orthogonal zu einer Richtung ist, die sich von dem einen Ende des Außenrohrs (110) zu dem anderen Ende des Außenrohrs (110) erstreckt.

10. Hydrolyse-Vorrichtung (10, 20), umfassend:
eine in einem der Ansprüche 1 bis 9 genannte Strömungsbegradigungsvorrichtung (100);
ein Hydrolyse-Reaktionsgefäß (400), das eine Hydrolyse-Reaktion von Harnstoffwasser bewirkt; und
eine Brenner-Einheit (300), die dazu konfiguriert ist, einen Brennstoff zu verbrennen, um der Strömungsbegradigungsvorrichtung (100) ein erhitztes Gas zuzuführen.

11. Hydrolyse-Vorrichtung (10, 20), umfassend:
eine Strömungsbegradigungsvorrichtung (100) nach Anspruch 9;
eine Vielzahl von Hydrolyse-Reaktionsgefäßen (400), von denen jedes dazu konfiguriert ist, eine Hydrolyse-Reaktion von Harnstoffwasser zu bewirken und einen Gasstrom aufzunehmen, der aus einem entsprechenden der Vielzahl von Rohrteilen (120) ausströmt; und
eine Brenner-Einheit (300), die dazu konfiguriert ist, einen Brennstoff zu verbrennen, um der Strömungsbegradigungsvorrichtung (100) ein erhitztes Gas zuzuführen.

12. Hydrolyse-Vorrichtung (10, 20) nach Anspruch 10 oder 11, ferner umfassend:
eine Verwirbelungsvorrichtung (600), die dazu konfiguriert ist, einen von der Brenner-Einheit (300) kommenden Gasstrom um eine Mittelachse des Außenrohrs (110) zu verwirbeln und dann den Gasstrom durch das eine Ende des Außenrohrs (110) in die Strömungsbegradigungsvorrichtung (100) einzuleiten.

13. Hydrolyse-Vorrichtung (10, 20) nach einem der Ansprüche 10 bis 12, wobei
das Hydrolyse-Reaktionsgefäß (400) ein oder mehrere Hydrolyse-Reaktionsgefäße (400) umfasst, von denen jedes eine rohrförmige Form aufweist, die in einer axialen Richtung des Hydrolyse-Reaktionsgefäßes (400) verlängert ist,
die Brenner-Einheit (300) eine Brennkammer (301) aufweist, die den Brennstoff verbrennt, wobei die Brennkammer (301) eine röhrenförmige Form hat, die in einer axialen Richtung der Brennkammer (301) verlängert ist, und
das eine oder die mehreren Hydrolyse-Reaktionsgefäße (400) und die Brenner-Einheit (300) so angeordnet sind, dass die axialen Richtungen des einen oder der mehreren Hydrolyse-Reaktionsgefäße (400) parallel zu der axialen Richtung der Brennkammer (301) verlaufen.

14. NOx-Entfernungssystem (1), das eine NOx-Entfernungsbehandlung an einem Abgas von einem Motor (21) durchführt, umfassend:
eine Hydrolyse-Vorrichtung (10, 20) nach einem der Ansprüche 10 bis 13; und
einen NOx-Entfernungsmechanismus, der dazu konfiguriert ist, das Abgas mit einem verarbeiteten Gas aus dem Hydrolyse-Reaktionsgefäß (400) zu mischen, um ein Gasgemisch zu erhalten, das Gasgemisch in einen NOx-Entfernungskatalysator einzuleiten und dann ein Ergebnis abzuführen.

15. NOx-Entfernungssystem (1), das eine NOx-Entfernungsbehandlung an Abgasen von einer Vielzahl von Motoren (21) durchführt, umfassend:
eine Hydrolyse-Vorrichtung (10, 20) nach einem der Ansprüche 10 bis 13; und
NOx-Entfernungsmechanismen und Bypass-Mechanismen, die jeweils für die Vielzahl von Motoren (21) vorgesehen sind, wobei
die NOx-Entfemungsmechanismen dazu konfiguriert sind, jeweils die Abgase aus der Vielzahl von Motoren (21) mit einem verarbeiteten Gas aus dem Hydrolyse-Reaktionsgefäß (400) zu mischen, um Mischgase zu erhalten, die Mischgase in NOx-Entfernungskatalysatoren einzuleiten und dann Ergebnisse abzuführen; und
die Bypass-Mechanismen dazu konfiguriert sind, jeweils zu bewirken, dass die Abgase aus der Vielzahl von Motoren (21) die NOx-Entfemungsmechanismen umgehen, um die Abgase abzuleiten.

16. NOx-Entfernungssystem (1), das eine NOx-Entfernungsbehandlung an Abgasen aus einer Vielzahl von Motoren (21) durchführt, umfassend:
eine Hydrolyse-Vorrichtung (10, 20) nach einem der Ansprüche 10 bis 13; und
einen NOx-Entfernungsmechanismus, der dazu konfiguriert ist, die Abgase aus der Vielzahl von Motoren (21) mit einem verarbeiteten Gas aus dem Hydrolyse-Reaktionsgefäß (400) zu mischen, um ein Gasgemisch zu erhalten, das Gasgemisch in einen NOx-Entfernungskatalysator einzuleiten und dann ein Ergebnis abzuführen; und
einen Bypass-Mechanismus, der dazu konfiguriert ist, zu bewirken, dass die Abgase aus der Vielzahl von Motoren (21) den NOx-Entfernungsmechanismus umgehen, um die Abgase abzuleiten.

## Revendications

1. Dispositif de redressement d'écoulement (100) à travers lequel passe un flux de gaz avant d'être introduit dans un récipient de réaction d'hydrolyse (400) qui provoque une réaction d'hydrolyse de l'eau d'urée, ledit dispositif de redressement d'écoulement (100) comprenant :
un tube extérieur (110) dans lequel le flux de gaz s'écoule à travers une première extrémité du tube extérieur (110) vers l'autre extrémité du tube extérieur (110) qui est opposée à la première extrémité ;
une paroi de commande (114) positionnée à l'intérieur du tube extérieur (110) ou au niveau de l'autre extrémité du tube extérieur (110), la paroi de commande (114) inversant au moins une partie du flux de gaz s'écoulant dans le tube extérieur (110) à travers la première extrémité vers l'autre extrémité ; et
au moins une partie de tube (120) qui est au moins partiellement positionnée à un emplacement qui est à l'intérieur du tube extérieur (110) et qui est entre la première extrémité et la paroi de commande (114), ladite au moins une partie de tube (120) constituant un passage d'écoulement du flux de gaz s'écoulant de l'intérieur du tube extérieur (110) vers l'extérieur du tube extérieur (110) à travers une paroi latérale (111) du tube extérieur (110) de manière à introduire le flux de gaz à l'intérieur du tube extérieur (110) dans le récipient de réaction d'hydrolyse (400), ladite au moins une partie de tube (120) ayant une partie d'entrée (122) et une partie de sortie (121) pour le flux de gaz.

2. Dispositif de redressement d'écoulement (100) selon la revendication 1, dans lequel
la partie d'entrée (122) de ladite au moins une partie de tube (120) est positionnée à un emplacement qui est à l'intérieur du tube extérieur (110) et qui est entre la première extrémité et la paroi de commande (114),
la partie de sortie (121) est positionnée à l'extérieur du tube extérieur (110), et
ladite au moins une partie de tube (120) a une surface périphérique extérieure positionnée pour bloquer au moins une partie du flux de gaz s'écoulant dans le tube extérieur (110) à travers la première extrémité vers l'autre extrémité.

3. Dispositif de redressement d'écoulement (100) selon la revendication 1 ou 2, comprenant en outre :
une plaque de séparation (201) ayant une forme plane, la plaque de séparation (201) étant disposée à un emplacement qui est à l'intérieur du tube extérieur (110) et qui est entre ladite au moins une partie de tube (120) et la paroi de commande (114), la plaque de séparation (201) s'étendant dans une direction longitudinale de ladite au moins une partie de tube (120) et dans une direction s'étendant de la première extrémité vers l'autre extrémité.

4. Dispositif de redressement d'écoulement (100) selon l'une quelconque des revendications 1 à 3, dans lequel
ladite au moins une partie de tube (120) a une partie d'élargissement de partie de tube (120) dans laquelle une zone de section transversale radiale de ladite au moins une partie de tube (120) est élargie à mesure que la proximité de la partie de sortie (121) par rapport à la partie d'entrée (122) augmente.

5. Dispositif de redressement d'écoulement (100) selon l'une quelconque des revendications 1 à 4, dans lequel
la première extrémité du tube extérieur (110) a une partie d'élargissement de passage d'écoulement dans laquelle une zone de section transversale d'un passage d'écoulement du flux de gaz s'écoulant dans le tube extérieur (110) à travers la première extrémité vers l'autre extrémité est élargie.

6. Partie d'élargissement de passage d'écoulement selon la revendication 5, dans laquelle
la partie d'élargissement de passage d'écoulement a une partie minimale dans laquelle une zone de section transversale du passage d'écoulement est inférieure à celle de toute autre portion de la partie d'élargissement de passage d'écoulement, ladite au moins une partie de tube (120) a une partie minimale ayant une zone de section transversale radiale inférieure à celle de toute autre portion de ladite au moins une partie de tube (120), et la zone de section transversale de la portion minimale de la partie d'élargissement de passage d'écoulement est supérieure ou égale à la zone de section transversale radiale de la portion minimale de ladite au moins une partie de tube (120).

7. Dispositif de redressement d'écoulement (100) selon l'une quelconque des revendications 1 à 6, dans lequel
le tube extérieur (110) a une paroi latérale qui est opposée à la partie d'entrée (122) de ladite au moins une partie de tube (120) et qui est pourvue d'une partie d'ouverture de maintenance (103) et d'une plaque de fermeture (221) qui est détachable et qui est configurée pour fermer la partie d'ouverture de maintenance (103).

8. Dispositif de redressement d'écoulement (100) selon l'une quelconque des revendications 1 à 7, dans lequel
la paroi de commande (114) ferme l'autre extrémité du tube extérieur (110).

9. Dispositif de redressement d'écoulement (100) selon l'une quelconque des revendications 1 à 8, dans lequel
ladite au moins une partie de tube (120) comprend une pluralité de parties de tube (120), et
la pluralité de parties de tube (120) ont respectivement des axes centraux positionnés sur un plan sensiblement orthogonal à une direction s'étendant de la première extrémité du tube extérieur (110) vers l'autre extrémité du tube extérieur (110).

10. Dispositif d'hydrolyse (10, 20) comprenant :
un dispositif de redressement d'écoulement (100) selon l'une quelconque des revendications 1 à 9 ;
un récipient de réaction d'hydrolyse (400) qui provoque une réaction d'hydrolyse de l'eau d'urée ; et
une unité de brûleur (300) configurée pour brûler un combustible de manière à fournir un gaz chauffé au dispositif de redressement d'écoulement (100).

11. Dispositif d'hydrolyse (10, 20) comprenant :
un dispositif de redressement d'écoulement (100) selon la revendication 9 ;
une pluralité de récipients de réaction d'hydrolyse (400) dont chacun est configuré pour provoquer une réaction d'hydrolyse de l'eau d'urée et pour recevoir un flux de gaz s'écoulant hors d'une partie correspondante de la pluralité de parties de tube (120) ; et
une unité de brûleur (300) configurée pour brûler un combustible de manière à fournir un gaz chauffé au dispositif de redressement d'écoulement (100).

12. Dispositif d'hydrolyse (10, 20) selon la revendication 10 ou 11, comprenant en outre :
un dispositif de tourbillonnement (600) configuré pour provoquer un tourbillonnement d'un flux de gaz provenant de l'unité de brûleur (300) autour d'un axe central du tube extérieur (110) puis pour introduire le flux de gaz dans le dispositif de redressement d'écoulement (100) à travers la première extrémité du tube extérieur (110).

13. Dispositif d'hydrolyse (10, 20) selon l'une quelconque des revendications 10 à 12, dans lequel
le récipient de réaction d'hydrolyse (400) comprend un ou plusieurs récipients de réaction d'hydrolyse (400) dont chacun a une forme tubulaire allongée dans une direction axiale du récipient de réaction d'hydrolyse (400),
l'unité de brûleur (300) comprend une chambre de combustion (301) qui brûle le combustible, la chambre de combustion (301) ayant une forme tubulaire allongée dans une direction axiale de la chambre de combustion (301), et
le ou les plusieurs récipients de réaction d'hydrolyse (400) et l'unité de brûleur (300) sont agencés de sorte que les directions axiales du ou des plusieurs récipients de réaction d'hydrolyse (400) soient parallèles à la direction axiale de la chambre de combustion (301).

14. Système d'élimination de NOx (1) qui réalise un traitement d'élimination de NOx sur un gaz d'échappement provenant d'un moteur (21), comprenant :
un dispositif d'hydrolyse (10, 20) selon l'une quelconque des revendications 10 à 13 ; et
un mécanisme d'élimination de NOx configuré pour mélanger le gaz d'échappement avec un gaz traité provenant du récipient de réaction d'hydrolyse (400) pour produire un gaz de mélange, pour introduire le gaz de mélange dans un catalyseur d'élimination de NOx, puis pour évacuer un résultant.

15. Système d'élimination de NOx (1) qui réalise un traitement d'élimination de NOx sur des gaz d'échappement provenant d'une pluralité de moteurs (21), comprenant :
un dispositif d'hydrolyse (10, 20) selon l'une quelconque des revendications 10 à 13 ; et
des mécanismes d'élimination de NOx et des mécanismes de dérivation respectivement prévus pour la pluralité de moteurs (21), dans lequel
les mécanismes d'élimination de NOx sont configurés pour mélanger respectivement les gaz d'échappement provenant de la pluralité de moteurs (21) avec un gaz traité provenant du récipient de réaction d'hydrolyse (400) pour produire des gaz de mélange, pour introduire les gaz de mélange dans des catalyseurs d'élimination de NOx, puis pour évacuer les résultants ; et
les mécanismes de dérivation sont configurés pour amener respectivement les gaz d'échappement provenant de la pluralité de moteurs (21) à contourner les mécanismes d'élimination de NOx de manière à évacuer les gaz d'échappement.

16. Système d'élimination de NOx (1) qui réalise un traitement d'élimination de NOx sur des gaz d'échappement provenant d'une pluralité de moteurs (21), comprenant :
un dispositif d'hydrolyse (10, 20) selon l'une quelconque des revendications 10 à 13 ; et
un mécanisme d'élimination de NOx configuré pour mélanger les gaz d'échappement provenant de la pluralité de moteurs (21) avec un gaz traité provenant du récipient de réaction d'hydrolyse (400) pour produire un gaz de mélange, pour introduire le gaz de mélange dans un catalyseur d'élimination de NOx, puis pour évacuer un résultant ; et
un mécanisme de dérivation configuré pour amener les gaz d'échappement provenant de la pluralité de moteurs (21) à contourner le mécanisme d'élimination de NOx de manière à évacuer les gaz d'échappement.
